# EUROPEAN PATENT SPECIFICATION

(11) **EP 2 874 216 B1**
(45) Date of publication and mention of the grant of the patent: **21.08.2019**
(21) Application number: 13817148.3
(22) Date of filing: 02.04.2013
(51) Int. Cl.: H01M 4/90, H01M 4/92, H01M 8/02, H01M 8/04, H01M 8/10, H01M 4/86, H01M 8/04828, H01M 8/04119, H01M 8/1018

(54) **METHOD FOR OPERATING FUEL CELL, AND ELECTRIC-POWER GENERATING DEVICE**
VERFAHREN ZUM BETRIEB EINER BRENNSTOFFZELLE UND STROMERZEUGUNGSVORRICHTUNG
PROCÉDÉ PERMETTANT DE FAIRE FONCTIONNER UNE PILE À COMBUSTIBLE, ET DISPOSITIF DE PRODUCTION D'ÉNERGIE ÉLECTRIQUE

(30) Priority: 11.07.2012 JP 2012155389
(43) Date of publication of application: 20.05.2015
(73) Proprietor: Showa Denko K.K., Tokyo 105-8518 (JP)
(72) Inventor: TEZUKA, Noriyasu, Tokyo 105-8518 (JP); HORIKITA, Masaki, Tokyo 105-8518 (JP); IMAI, Takuya, Tokyo 105-8518 (JP); YOSHIMURA, Masayuki, Tokyo 105-8518 (JP); ITO, Yuji, Tokyo 105-8518 (JP); SATO, Takashi, Tokyo 105-8518 (JP)
(74) Representative: Strehl Schübel-Hopf & Partner
(86) International application number: PCT/JP2013/060019
(87) International publication number: WO 2014/010278

(56) References cited:
- EP-A1- 1 873 849
- EP-A1- 2 258 475
- EP-A1- 2 666 541
- EP-A1- 2 804 244
- WO-A1-2009/104500
- WO-A1-2011/099493
- WO-A1-2011/099493
- WO-A1-2012/098712
- JP-A- 2008 181 696
- US-A1- 2011 027 677

## Description

### Technical Field

The present invention relates to a method for operating a fuel cell, and more particularly a method for operating a polymer electrolyte fuel cell that involves supplying a low-humidified or non-humidified gas.

### Background Art

A polymer electrolyte fuel cell (PEFC) is a fuel cell in the form in which a solid polymer electrolyte membrane is sandwiched between an anode and a cathode, a fuel is supplied to the anode, and oxygen or air is supplied to the cathode, whereby oxygen is reduced at the cathode to produce electricity. As the fuel, hydrogen gas, methanol or the like is mainly used. To enhance a reaction rate in the fuel cell and to enhance the energy conversion efficiency of the fuel cell, a layer containing a catalyst has been conventionally disposed on the surface of the cathode or the surface of the anode of the fuel cell. As the catalyst, a noble metal such as platinum has been primarily used. In recent years, the development has been actively conducted of catalysts alternative to the noble metal catalysts.

As a carrier for supporting the catalyst, carbon black has been conventionally used. During a repeated start-stop operation of the PEFC, the cathode is temporarily exposed to high potential, for example, about 1.5 V. Under such a high potential, carbon serving as the carrier undergoes oxidative corrosion in the presence of water, which causes the carrier to be decomposed and deteriorated. The deterioration of the carrier decreases the power generation performance of the PEFC and promotes the aggregation of the catalyst (noble metal), lowering the power generation performance of the fuel cell. Thus, it has been demanded that the power generation performance be not lowered even if the repeated start-stop operation is conducted.

In order to allow the solid polymer electrolyte membrane to exhibit sufficient proton conductivity, the anode and the cathode have been conventionally supplied respectively with a fuel gas and an oxidizing agent gas that have been humidified. Humidifying feed gases, however, needs installing a humidifier or the like, which is why a fuel cell system as a whole cannot be downsized. Operation of the fuel cell even under low humidity could simplify a humidifier control system, and operation of the fuel cell even under no humidity would not require installing the humidifier itself. Thus, a method for operating a fuel cell with its high performance maintained even under low humidity or no humidity is demanded.

Patent Literature 1 discloses a membrane electrode assembly having an anode equipped with a catalyst layer that contains a catalyst including a support catalyst in which platinum or the like is supported on a carbon carrier and a support catalyst in which platinum or the like is supported on a hydrophilic carrier (e.g., zeolite, titania). Patent Literature 1 describes that by using this for a fuel cell, an amount of a feed gas to be humidified can be decreased.

Patent Literature 2 discloses a fuel cell in which an electrode has a catalyst layer containing a catalyst metal, a carbon-based conductive carrier for supporting the catalyst metal, a proton conductive component and hydrophobic particles-supporting hydrophilic particles. Patent Literature 2 describes that this fuel cell is applicable to a feed gas with a wide range of humidity (humidify conditions).

On the other hand, Patent Literature 3 discloses a catalyst given by supporting a noble metal catalyst, e.g., platinum on a carrier resistant to high potential which is a carrier obtained by carbonizing a raw material containing a nitrogen-containing organic matter and a metal. Patent Literature 3 describes that this carrier attains both durability and catalyst supporting performance at high level.

Patent Literature 4 discloses a catalyst composed of a catalyst carrier containing atoms of a metal element, carbon, nitrogen and oxygen and of a metal catalyst, e.g., platinum, supported on the carrier. Patent Literatures 5 and 6 also disclose a catalyst containing atoms of a metal element, carbon, nitrogen and oxygen. Patent literature 7 discloses a method of operating a fuel cell by supplying the cathode with oxygen gas in conditions of low humidity.

### Citation List

### Patent Literatures

Patent Literature 1: JP-A-2004-342505
Patent Literature 2: JP-A-2005-174835
Patent Literature 3: JP-A-2011-115760
Patent Literature 4: WO2009/104500
Patent Literature 5: WO2010/126020
Patent Literature 6: WO2011/099493
Patent Literature 7: WO2011/0027677

### Summary of the Invention

### Technical Problem

Since the membrane electrode assemblies or fuel cells in Patent Literatures 1 and 2 employ a carbon-based carrier, however, deterioration of the carbon carrier caused by the presence of water, as described above, leads to the decrease of power generation performance of the fuel cell. In addition, there is still a need for improvement in terms of suppressing voltage decrease caused when lowering the humidity of a feed gas to e.g., a cathode.

On the other hand, Patent Literatures 3 to 6 do not appreciate lowering the humidity degree of a gas fed to electrodes such as a cathode in the operation of fuel cells. Further, Patent Literatures 5 and 6 do not describe using the catalysts disclosed therein as a carrier of a noble metal catalyst, e.g., platinum.

The present invention, in order to solve the problems associated with such conventional art as described above, has been made to provide a method for operating a fuel cell that involves supplying an electrode such as a cathode with a low-humidified or non-humidified gas that achieves a fuel cell operation with no significant decrease of voltage as compared with when a high-humidified feed gas is used.

### Technical Solution

The present inventors have their earnest studies, and have found that the above problems can be solved by a fuel cell operation that involves using a cathode having a layer comprising a specific oxygen reducing catalyst, and supplying the cathode with a low-humidified oxidizing agent gas comprising an oxygen gas, thereby perfecting the present invention.

The present invention concerns, for example [1] to [11] described below
[1] A method for operating a fuel cell comprising a membrane electrode assembly including a cathode, an anode and an electrolyte membrane interposed between both the electrodes,
   wherein the cathode has a layer comprising an oxygen reducing catalyst comprising
   (i) composite particles, the composite particles being particles in which primary particles of a compound of a metal element M1 are dispersed in a structure composed of carbon, the composite particles comprising an atom of at least one metal element M1 selected from the group consisting of titanium, niobium, zirconium, tantalum and tin, and atoms of carbon, nitrogen and oxygen, wherein carbon is contained at not less than 0.5 mol and not more than 7 mol, nitrogen is contained at more than 0 mol and not more than 1 mol, and oxygen is contained at not less than 1 mol and not more than 3 mol based on 1 mol of the whole of the metal element M1, and comprising
   (ii) particles composed of a noble metal element or its alloy,
   which method comprises supplying the cathode with an oxidizing agent gas which comprises an oxygen gas and which has a relative humidity at a temperature of the membrane electrode assembly of not more than 60%, and supplying the anode with a fuel gas.
[2] The method for operating a fuel cell according to [1], wherein the metal element M1 is titanium.
[3] The method for operating a fuel cell according to [1] or [2], wherein the composite particles have a spectrum obtained from Raman spectrometry in which an intensity ratio (D/G ratio) of a peak intensity of D band to a peak intensity of G band is 0.4 to 1.0.
[4] The method for operating a fuel cell according to any one of [1] to [3], wherein the composite particles comprise at least one metal element M2 selected from the group consisting of iron, nickel, chromium, cobalt and manganese at not more than 0.3 mol based on 1 mol of the metal element M1.
[5] The method for operating a fuel cell according to any one of [1] to [4], wherein the metal element M1 is titanium and the composite particles have a diffraction pattern obtained from X-ray diffractometry using Cu-Kα ray in which a peak is present in each of an area A of 2θ = 26 to 28°, an area B of 2θ = 35 to 37°, an area C of 2θ = 40 to 42° and an area D of 2θ = 53 to 55° and a peak with the highest intensity of all the peaks that appear in the diffraction pattern is present in the area A.
[6] The method for operating a fuel cell according to any one of [1] to [5], wherein the metal element M1 is titanium, and a valence of titanium in the composite particles as determined by X-ray absorption near-edge structure (XANES) analysis is more than 3 and less than 4.
[7] The method for operating a fuel cell according to any one of [1] to [6], wherein the noble metal element is at least one noble metal selected from platinum, palladium, iridium, rhodium and ruthenium.
[8] The method for operating a fuel cell according to any one of [1] to [7], wherein the alloy of the noble metal element is an alloy composed of the noble metal element and at least one metal element selected from the group consisting of iron, nickel, chromium, cobalt, titanium, copper, vanadium and manganese.
[9] The method for operating a fuel cell according to any one of [1] to [8], wherein the anode has a layer comprising an oxygen reducing catalyst, and the oxygen reducing catalyst comprises particles comprising the composite catalyst and a noble metal element or an alloy of the noble metal element.
[10] The method for operating a fuel cell according to any one of [1] to [9], wherein the anode is supplied with the fuel gas which is a gas having a relative humidity of not more than 60% at a temperature of the membrane electrode assembly.
[11] A power generation device comprising:
   a fuel cell that comprises a membrane electrode assembly comprising a cathode, an anode and an electrolyte membrane interposed between both the electrodes;
   a means for supplying the cathode with an oxidizing agent gas which contains an oxygen gas and which has a relative humidity of not more than 60% at a temperature of the membrane electrode assembly; and
   a means for supplying the anode with a fuel gas,
   wherein the cathode has a layer comprising an oxygen reducing catalyst including
      (i) composite particles in which primary particles of a compound of a metal element M1 are dispersed in a structure composed of carbon, the composite particles comprising an atom of at least one metal element M1 selected from the group consisting of titanium, niobium, zirconium, tantalum and tin, and atoms of carbon, nitrogen and oxygen, wherein carbon is contained at not less than 0.5 mol and not more than 7 mol, nitrogen is contained at more than 0 mol and not more than 1 mol, and oxygen is contained at not less than 1 mol and not more than 3 mol based on 1 mol of the whole of the metal element M1, and including
      (ii) particles composed of a noble metal element or its alloy.

### Advantageous Effects of the Invention

According to the present invention, a fuel cell can be operated with no significant voltage decrease as compared with when a high-humidified feed gas is used.

Particularly, the fuel cell (in more detail, polymer electrolyte fuel cell) with the above configuration using the oxygen reducing catalyst, when operated by the method of the present invention, exhibits high performance, particularly superior initial performance (i.e., high initial voltage), and can provide satisfactory start-stop durability. In addition, the fuel cell using the oxygen reducing catalyst is more inexpensive than fuel cells using conventional platinum-supporting carbon catalysts. An article having said fuel cell and equipped with at least one function selected from the group consisting of electricity generation function, light emitting function, heat generation function, sound generating function, movement function, display function and charging function can exhibit its functions improved when said fuel cell is operated by the method of the present invention.

### Brief Description of the Drawings

FIG. 1 is a schematic figure showing a reaction vessel used in Production Example 25.
FIG. 2(a) is a transmission electron microscopic image of a catalyst (4) obtained during the course of Production Example 4. FIG. 2(b) is a transmission electron microscopic image of a catalyst (5) obtained during the course of Production Example 5. FIG. 2(c) is a transmission electron microscopic image of a catalyst (13) obtained during the course of Production Example 13.
FIG. 3 is a powder X-ray diffraction pattern of a catalyst (4) obtained during the course of Production Example 4.
FIG. 4 is a figure showing the relation between time and voltage regarding a triangular wave potential cycle applied in a start-stop durability test.

### Description of Embodiments

The method for operating a fuel cell according to the present invention is a method for operating a fuel cell comprising a membrane electrode assembly that comprises a cathode, an anode and an electrolyte membrane interposed between both the electrodes,
wherein the cathode has a layer comprising a specific oxygen reducing catalyst,
which method comprises supplying the cathode with an oxidizing agent which comprises an oxygen gas and which has a relative humidity at a temperature of the membrane electrode assembly of not more than 60%, and supplying the anode with a fuel.

### <Oxygen Reducing Catalyst>

The oxygen reducing catalyst used in the method for operating a fuel cell of the present invention includes composite particles which comprise an atom of at least one metal element M1 selected from the group consisting of titanium, niobium, zirconium, tantalum and tin, and atoms of carbon, nitrogen and oxygen each at a specific proportion described below and in which primary particles of a compound of the metal element M1 are dispersed in a structure composed of carbon.

### [Composite Particles]

In the composite particles, the content of a carbon atom is not less than 0.5 mol and not more than 7 mol, preferably 1.5 to 6 mol, more preferably 2.5 to 5 mol, based on 1 mol of the metal element M1 atom; the content of a nitrogen atom is more than 0 mol and not more than 1 mol, preferably 0.01 to 0.4 mol, more preferably 0.02 to 0.2 mol, based on 1 mol of the metal element M1 atom; and the content of an oxygen atom is not less than 1 mol and not more than 3 mol, preferably 1 to 2.5 mol, more preferably 1.2 to 2.2 mol, based on 1 mol of the metal element M1 atom.

It is considered that:
the oxygen reducing catalyst has hydrophilicity;
thus, by operating a fuel cell having a cathode catalyst layer comprising such an oxygen reducing catalyst, water to be generated by operation of the fuel cell (power generation) can be supplied to a solid polymer electrolyte membrane, unlike an operation of a fuel cell using a conventional hydrophobic carbon as a catalyst carrier; and
therefore, even when a low-humidified or non-humidified feed gas is used as a feed gas, fuel cell operation is possible without significant voltage decrease as compared with when a high-humidified feed gas is used.

The composite particles may further comprise a second metal element M2. The inclusion of the second metal element M2 increases the performance of the oxygen reducing catalyst. The second metal element M2 is at least one selected from the group consisting of iron, nickel, chromium, cobalt and manganese. Of these, from the viewpoint of the balance between cost and catalytic performance, iron and chromium are preferred, and iron is particularly preferred. The content of the metal element M2 is not more than 0.3 mol, preferably not more than 0.25 mol, more preferably 0.01 to 0.2 mol, based on 1 mol of the metal element M1. When the content of the metal element M2 is in this range, the oxygen reducing catalyst has more improved performance.

The composite particles, in Raman spectrum (spectrum obtained by subjecting the composite particles to Raman spectrometry), has an intensity ratio (D/G ratio, which is detailed in Example described later) of a peak intensity of D band to a peak intensity of G band that is preferably 0.4 to 1.0, more preferably 0.5 to 0.95, further preferably 0.6 to 0.90. By using the composite particles having a D/G ratio in the above range, in the operation of the fuel cell using the low-humidified or non-humidified oxidizing agent gas, voltage decrease can be further suppressed as compared with when a high-humidified oxidizing agent gas is used and in the repeated start-stop operation of the fuel cell, there is less voltage decrease (hereinafter, this is also referred to as, for example, "superior start-stop durability").

Decreasing the D/G ratio to less than 0.4 is not effective in terms of cost effectiveness.

When the metal element M1 is titanium, preferred composite particles are those having a diffraction pattern obtained from X-ray diffractometry using Cu-Kα ray in which a peak is present in each of an area A of 2θ = 26 to 28°, an area B of 2θ = 35 to 37°, an area C of 2θ = 40 to 42° and an area D of 2θ = 53 to 55° and a peak with the highest intensity of all the peaks that appear in the diffraction pattern is present in the area A.

The composite particles having such an XRD pattern is believed to have a rutile-type titanium oxide as their main phase. By using said composite particles, in the operation of the fuel cell using a low-humidified or non-humidified oxidizing agent gas, it is possible to further suppress voltage decrease as compared with when a high-humidified oxidizing agent gas is used, and superior start-stop durability is exhibited.

When the metal element M1 is titanium, the valence of titanium in the composite particles as determined by X-ray absorption near-edge structure (XANES) is preferably more than 3 and less than 4. When the valence of titanium is within the above-described range, in the operation of the fuel cell using a low-humidified or non-humidified oxidizing agent gas, it is possible to further suppress voltage decrease as compared with when a high-humidified oxidizing agent gas is used, and superior start-stop durability is exhibited.

The fact that the composite particles are particles in which primary particles of a compound of the metal element M1 are dispersed in a structure composed of carbon can be verified, for example, by observing said particles with a transmission electron microscope. This is considered to be because in the production method of the composite particles shown below, the composite particles in which primary particles of a compound of the metal element M1 are highly dispersed in a structure composed of carbon is obtained by the thermal decomposition of a precursor in which the central metal M1 is highly dispersed in an organic compound serving as a carbon source and a nitrogen source.

The composite particles have a specific surface area as calculated by BET method preferably of 100 m²/g or more, more preferably 100 to 600 m²/g, further preferably 150 to 600 m²/g.

### <Method for Producing Composite Particles>

The composite particles which comprise atoms of the metal element M1, carbon, nitrogen and oxygen each at a specific proportion and in which primary particles of a compound of the metal element M1 are dispersed in a structure composed of carbon can be produced, for example, by applying heat treatment and oxidation treatment to a mixture of a compound containing the metal element M1 (hereinafter also referred to as the "M1-containing compound (1)") and a nitrogen-containing organic compound (2) (wherein at least one of the M1-containing compound (1) and the nitrogen-containing organic compound (2) has an oxygen atom).

The mixture is produced preferably through Step 1 of mixing the M1-containing compound (1), the nitrogen-containing organic compound (2) and a solvent with one another to obtain a catalyst precursor solution; and Step 2 of removing the solvent from the catalyst precursor solution to obtain a solid content residue (i.e., the mixture).

The composite particles can be produced, for example, through Step 1 of mixing the M1-containing compound (1), the nitrogen-containing organic compound (2) (wherein at least one of the M1-containing compound (1) and the nitrogen-containing organic compound (2) has an oxygen atom) and a solvent with each other to obtain a catalyst precursor solution; Step 2 of removing the solvent from the catalyst precursor solution to obtain a solid content residue; and Step 3 of heat-treating the solid content residue at a temperature of 500 to 1400°C to obtain a heat-treated product.

### (Step 1)

In Step 1, the M1-containing compound (1), the nitrogen-containing organic compound (2) (wherein at least one of the M1-containing compound (1) and the nitrogen-containing organic compound (2) has an oxygen atom) and the solvent, at least, are mixed to each other to obtain a catalyst precursor solution. When the composite particles comprising the second metal element M2 are prepared, a compound containing at least one metal element M2 selected from iron, nickel, chromium, cobalt and manganese is further added as a compound containing the second metal element M2 (hereinafter also referred to as the "M2-containing compound (3)") to the catalyst precursor solution. The order of adding these materials is not particularly limited.

To perform reaction smoothly, the mixing is conducted preferably with stirring of the solvent. At this time, if the above compounds are difficult to dissolve in the solvent, temperature may be increased. If the mixing involves rapid heat generation, the mixing is conducted with cooling or the compounds are added little by little for mixing.

### M1-Containing Compound (1)

The M1-containing compound (1) preferably has at least one kind selected from an oxygen atom and a halogen atom. Examples of the M1-containing compound (1) include complex of the metal element M1 and phosphate, sulfate, nitrate, organic acid salt, acid halide (intermediate hydrolyzate of halide), alkoxide, ester, halide, perhalogenated acid salt and hypohalous acid salt, of the metal element M1. More preferred examples include alkoxide, ester, acetylacetone complex, chloride, bromide, iodide, acid chloride, acid bromide, acid iodide and sulfate, of the metal element M1. Still more preferred examples include alkoxide or acetylacetone complex from a viewpoint of solubility in a solvent in the liquid phase. These compounds may be used alone or in combination of two or more kinds.

Specific examples of the M1-containing compound (1) include:
titanium compounds such as titanium tetramethoxide, titanium tetraethoxide, titanium tetrapropoxide, titanium tetraisopropoxide, titanium tetrabutoxide, titanium tetraisobutoxide, titanium tetrapentoxide, titanium tetraacetylacetonate, titanium oxydiacetylacetonate, bis[tris(2,4-pentanedionato)titanium(IV)] hexachlorotitanate(IV) ([Ti(acac)₃]₂[TiCl₆]) (acac represents an acetylacetonato ion, the same applies hereinafter), titanium tetrachloride, titanium trichloride, titanium oxychloride, titanium tetrabromide, titanium tribromide, titanium oxybromide, titanium tetraiodide, titanium triiodide, and titanium oxyiodide;
niobium compounds such as niobium pentamethoxide, niobium pentaethoxide, niobium pentaisopropoxide, niobium pentabutoxide, niobium pentapentoxide, niobium triacetylacetonate, niobium pentaacetylacetonate, niobium diisopropoxide triacetylacetonate (Nb(acac)₃(O-iPr)₂), tris(2,2,6,6-tetramethyl-3,5-heptanedione)niobium, niobium(III) hexafluoroacetylacetonate, niobium pentachloride, niobium oxychloride, niobium pentabromide, niobium oxybromide, niobium pentaiodide, and niobium oxyiodide;
zirconium compounds such as zirconium tetramethoxide, zirconium tetraethoxide, zirconium tetrapropoxide, zirconium tetraisopropoxide, zirconium tetrabutoxide, zirconium tetraisobutoxide, zirconium tetrapentoxide, zirconium tetraacetylacetonate, zirconium diisopropoxide diacetylacetonate (Zr(acac)₂(O-iPr)₂), tetrakis(diethylamino)zirconium, tetrakis(2,2,6,6-tetramethyl-3,5-heptanedione)zirconium, zirconium(IV) hexafluoroacetylacetonate, tetra-1-methoxy-2-methyl-2-propoxyzirconium (IV), zirconium tetrachloride, zirconium oxychloride, zirconium tetrabromide, zirconium oxybromide, zirconium tetraiodide, and zirconium oxyiodide;
tantalum compounds such as tantalum pentamethoxide, tantalum pentaethoxide, tantalum pentaisopropoxide, tantalum pentabutoxide, tantalum pentapentoxide, tantalum tetraethoxyacetylacetonate, tantalum diisopropoxide diacetylacetonate (Ta(acac)₂(O-iPr)₂), pentakis(diethylamino)tantalum, tantalum pentachloride, tantalum oxychloride, tantalum pentabromide, tantalum oxybromide, tantalum pentaiodide, and tantalum oxyiodide; and
tin compounds such as tin(IV) methoxide, tin(IV) ethoxide, tin(IV) propoxide, tin(IV) isopropoxide, tin(IV) butoxide, tin(IV) isobutoxide, tin(IV) pentoxide, tin(II) acetylacetonate, tin(IV) diisopropoxide diacetylacetonate (Sn(acac)₂(O-iPr)₂), tetrakis(diethylamino)tin, tetrakis(2,2,6,6-tetramethyl-3,5-heptanedione)tin, tin(II) hexafluoroacetylacetonate, tetra-1-methoxy-2-methyl-2-propoxytin(IV), tin tetrachloride, tin dichloride, tin oxychloride, tin tetrabromide, tin dibromide, tin oxybromide, tin tetraiodide, tin diiodide, tin oxyiodide, tin acetate, tin oxalate, tin tartrate and tin sulfate.
These may be used alone or in combination of two or more kinds.

### Nitrogen-Containing Organic Compound (2)

As the nitrogen-containing organic compound (2), a compound that can be a ligand allowing coordination with an M1 atom in the M1-containing compound (1) is preferred, and a compound that can be a multidentate ligand (preferably a bidentate ligand or a tridentate ligand) so as to allow formation of a chelate is more preferred.

The nitrogen-containing organic compound (2) may be used alone or in combination of two or more kinds.

The nitrogen-containing organic compound (2) preferably has a functional group such as an amino group, a nitrile group, an imide group, an imine group, a nitro group, an amide group, an azide group, an aziridine group, an azo group, an isocyanato group, an isothiocyanate group, an oxime group, a diazo group and a nitroso group, or a ring such as a pyrrole ring, a porphyrin ring, an imidazole ring, a pyridine ring, a pyrimidine ring and a pyrazine ring (the functional groups and the rings are also collectively referred to as "nitrogen-containing molecular group").

When the nitrogen-containing organic compound (2) has the nitrogen-containing molecular group in a molecule, the compound (2) is thought to allow stronger coordination with a metal element M1 atom originating in the M1-containing compound (1) through mixing in Step 1.

Among the nitrogen-containing molecular groups, an amino group, an imine group, an amide group, a pyrrole ring, a pyridine ring and a pyrazine ring are more preferred; an amino group, an imine group, a pyrrole ring and a pyrazine ring are still more preferred; and an amino group and a pyrazine ring are particularly preferred in view of particularly enhanced activity of the oxygen reducing catalyst obtained.

The nitrogen-containing organic compound (2) preferably has a hydroxyl group, a carboxyl group, a formyl group, a halocarbonyl group, a sulfonic acid group, a phosphoric acid group, a ketone group, an ether group or an ester group (these are also collectively referred to as the "oxygen-containing molecular group"). When the nitrogen-containing organic compound (2) has the oxygen-containing molecular group in a molecule, the compound (2) is thought to allow stronger coordination with a metal element M1 atom originating in the M1-containing compound (1) through mixing in Step 1.

Among the oxygen-containing molecular groups, a carboxyl group and a formyl group are particularly preferred in view of particularly enhanced activity of the oxygen reducing catalyst obtained.

As a compound having the nitrogen-containing molecular group and the oxygen-containing molecular group, amino acid having an amino group and a carboxyl group, and a derivative thereof are preferred.

As the amino acid, alanine, arginine, asparagine, aspartic acid, cysteine, glutamine, glutamic acid, glycine, histidine, isoleucine, leucine, lysine, methionine, phenylalanine, serine, threonine, tryptophane, tyrosine, valine, norvaline, glycylglycine, triglycine and tetraglycine are preferred. In addition to the amino acid or the like, specific examples include acyl pyrroles such as acetyl pyrrole, pyrrole carboxylic acid, acyl imidazoles such as acetyl imidazole, carbonyldiimidazole, imidazolecarboxylic acid, pyrazole, acetanilide, pyrazinecarboxylic acid, piperidinecarboxylic acid, piperazinecarboxylic acid, morpholine, pyrimidinecarboxylic acid, nicotinic acid, 2-pyridinecarboxylic acid, 2,4-pyridinedicarboxylic acid, 8-quinolinol and polyvinylpyrrolidone. In view of high activity of the oxygen reducing catalyst obtained, a compound that can be a bidentate ligand, specifically, pyrrole-2-carboxylic acid, imidazole-4-carboxylic acid, 2-pyrazinecarboxylic acid, 2-piperidinecarboxylic acid, 2-piperazinecarboxylic acid, nicotinic acid, 2-pyridinecarboxylic acid, 2,4-pyridinedicarboxylic acid and 8-quinolinol are preferred. Among the compounds, alanine, glycine, lysine, methionine, tyrosine, 2-pyrazinecarboxylic acid and 2-pyridinecarboxylic acid are more preferred.

In order to facilitate adjustment of content of a carbon atom in the composite particles to the above-described preferred range, a ratio (B/A) of total number B of atoms of carbon in the nitrogen-containing organic compound (2) used in Step 1 to the number A of atoms of a metal element M1 in the M1-containing compound (1) used in Step 1 is preferably in the range of 2 to 200, more preferably in the range of 3 to 100, still more preferably in the range of 5 to 50.

In order to facilitate adjustment of content of a nitrogen atom in the composite particles to the above-described preferred range, a ratio (C/A) of total number C of atoms of nitrogen in the nitrogen-containing organic compound (2) used in Step 1 to the number A of atoms of a metal element M1 in the M1-containing compound (1) used in Step 1 is preferably in the range of 1 to 28, more preferably in the range of 2 to 17, still more preferably in the range of 3 to 12.

When a ratio of the M1-containing compound (1) to the M2-containing compound (3) that are used in Step 1 is converted into a molar ratio (M1: M2) of a metal element M1 atom to a metal element M2 atom which is expressed as M1 : M2 = 1: a, a is preferably in the range of 0.3 or less, more preferably in the range of 0.05 to 0.2.

### M2-Containing Compound (3)

Specific examples of the M2-containing compound (3) include:
iron compounds such as iron(II) chloride, iron(III) chloride, iron(III) sulfate, iron(II) sulfide, iron(III) sulfide, potassium ferrocyanide, potassium ferricyanide, ammonium ferrocyanide, ammonium ferricyanide, ferric ferrocyanide, iron(II) nitrate, iron(III) nitrate, iron(II) oxalate, iron(III) oxalate, iron(II) phosphate, iron(III) phosphate, ferrocene, iron(II) hydroxide, iron(III) hydroxide, iron(II) oxide, iron(III) oxide, triiron tetraoxide, iron(II) ethylenediaminetetraacetate ammonium, iron(II) acetate, iron(II) lactate and iron(III) citrate;
nickel compounds such as nickel(II) chloride, nickel(II) sulfate, nickel(II) sulfide, nickel(II) nitrate, nickel(II) oxalate, nickel(II) phosphate, nickelocene, nickel(II) hydroxide, nickel(II) oxide, nickel(II) acetate and nickel(II) lactate;
chromium compounds such as chromium(II) chloride, chromium(III) chloride, chromium(III) sulfate, chromium(III) sulfide, chromium(III) nitrate, chromium(III) oxalate, chromium(III) phosphate, chromium(III) hydroxide, chromium(II) oxide, chromium(III) oxide, chromium(IV) oxide, chromium(VI) oxide, chromium(II) acetate, chromium(III) acetate and chromium(III) lactate;
cobalt compounds such as cobalt(II) chloride, cobalt(III) chloride, cobalt(II) sulfate, cobalt(II) sulfide, cobalt(II) nitrate, cobalt(III) nitrate, cobalt(II) oxalate, cobalt(II) phosphate, cobaltocene, cobalt(II) hydroxide, cobalt(II) oxide, cobalt(III) oxide, tricobalt tetroxide, cobalt(II) acetate and cobalt(II) lactate; and
manganese compounds such as manganese(II) chloride, manganese(II) sulfate, manganese(II) sulfide, manganese(II) nitrate, manganese(II) oxalate, manganese(II) hydroxide, manganese(II) oxide, manganese(III) oxide, manganese(II) acetate, manganese(II) lactate and manganese citrate. These compounds may be used alone or in combination of two or more kinds.

### Solvent

Examples of the solvent include water, acetic acid, acetylacetone, alcohols and a mixed solvent thereof. As the alcohols, ethanol, methanol, butanol, propanol and ethoxyethanol are preferred, and ethanol and methanol are more preferred. Incorporation of an acid into the solvent is preferred to increase solubility. As the acid, acetic acid, nitric acid, hydrochloric acid, phosphoric acid and citric acid are preferred, and acetic acid and nitric acid are more preferred. These solvents may be used alone or in combination of two or more kinds.

### (Step 2)

In Step 2, the solvent is removed from the catalyst precursor solution obtained in Step 1 to give a solid residue. A method for removing the solvent, which is not particularly limited, may be a method for using a spray dryer or a rotary evaporator, for example.

Depending on a method for removing the solvent, or properties of the M1-containing compound (1) or the nitrogen-containing organic compound (2), a composition of the solid residue obtained in Step 2 or an agglomeration state thereof can be non-uniform. In such a case, by mixing and crushing the solid residue so as to form more uniform and finer powder and using this powder in Step 3, composite particles having a more uniform particle diameter can be obtained.

Mixing and crushing the solid residue may be performed by a method, for example, using a mortar, an automatic kneading mortar or a ball mill. A method to be adopted when the solid residue is in a large amount and is subject to continuous mixing or crushing treatment is, for example, a method using a jet mill.

### (Step 3)

In Step 3, the solid residue obtained in Step 2 is heat-treated to give a heat-treated product.

A temperature in this heat treatment is, for example, in the range of 500°C to 1,400°C, more preferably in the range of 700°C to 1,400°C, still more preferably in the range of 800°C to 1,300°C. When the metal element M1 is titanium, a temperature of 700°C or higher is required in order that the composite particles have a rutile-type titanium oxide as their main phase. The temperature exceeding 1,400°C makes it difficult to adjust the contents of carbon, nitrogen and oxygen in the composite particles within the above-described ranges.

Exemplary methods of the heat treatment include static method, stirring method, dropping method and powder capturing method.

When the heat treatment is applied by the static method, a heating rate is not particularly limited, but is preferably about in the range of 1°C per minute to 100°C per minute, more preferably in the range of 5°C per minute to 50°C per minute. Heating time is preferably in the range of 0.1 to 10 hours, more preferably in the range of 0.5 to 5 hours, still more preferably in the range of 0.5 to 3 hours. When heating is performed in an infrared furnace such as an infrared gold image furnace or in a tubular furnace in the static method, heating time is in the range of 0.1 to 10 hours, preferably in the range of 0.5 to 5 hours. When the heating time is within the above-described range, uniform heat-treated product particles tend to be formed.

In the case of the stirring method typified by a method using a rotary kiln or the like, heating time of the solid residue is generally in the range of 0.1 to 5 hours, preferably in the range of 0.5 to 2 hours. In this method, when heating is continuously performed by inclining the furnace or the like, average residence time calculated from a steady sample flow rate in the furnace is taken as the heating time.

In the case of the dropping method, heating time of the solid residue is generally in the range of 0.5 to 10 minutes, preferably in the range of 0.5 to 3 minutes. When the heating time is within the above-described range, uniform heat-treated product particles tend to be formed.

In the case of the powder capturing method, heating time of the solid residue is in the range of 0.2 second to 1 minute, preferably in the range of 0.2 to 10 seconds. When the heating time is within the above-described range, uniform heat-treated product particles tend to be formed.

In order to facilitate adjustment of content of each constituent element of the composite particles within the above-described range, an electric furnace using electricity as a heat source or an infrared furnace such as an infrared gold image furnace to allow strict temperature control is preferably used.

In order to facilitate adjustment of the content of each constituent element of the composite particles within the above-described range, an atmosphere upon applying the heat treatment preferably includes a non-oxidizing atmosphere. In that sense, a main component thereof is preferably a non-oxidizing gas atmosphere. Among non-oxidizing gases, in view of relative inexpensiveness and easy availability, nitrogen gas, argon gas, helium gas and hydrogen gas are preferred; nitrogen gas and argon gas are more preferred; and a mixed gas of any of these gases and hydrogen gas is still more preferred. The non-oxidizing gases may be used alone or in combination of two or more kinds.

When hydrogen gas is contained in the atmosphere of the heat treatment, a concentration of hydrogen gas is, for example, 100 vol% or less, preferably in the range of 1 to 20 vol%, more preferably in the range of 1 to 5 vol%.

The heat-treated product obtained by the heat treatment may be directly used in the next step, or may be crushed before used in the next step. An operation of making the heat-treated product finer, such as crushing and fracturing, is herein expressed as "crushing" without particular distinction. Crushing can lead to improvement in processability upon producing an electrode using the oxygen reducing catalyst obtained, and improvement in characteristics of the resultant electrode. For the crushing, for example, a roll tumbling mill, a ball mill, a small-diameter ball mill (bead mill), a medium stirring mill, an airflow grinder, a mortar, an automatic kneading mortar, a vessel crusher or a jet mill can be used.

### (Step 4)

The production method preferably includes Step 4, where the heat-treated product obtained in Step 3 is subjected to oxidation treatment using an oxidizing agent giving an oxygen atom. The degree of oxidation treatment in Step 4 is adjusted so that the D/G ratio of the composite particles is in the range of 0.4 to 1.0.

Examples of the oxidizing agent giving an oxygen atom include hydrogen peroxide, perchloric acid, peracetic acid and water vapor.

The D/G ratio can be adjusted within the above-described range by adjusting a degree of oxidation. Oxidation allows a decrease of the D/G ratio, but excessive oxidation treatment adversely causes an increase of the D/G ratio. In carrying out the step 4, it is preferable to determine oxidation conditions for adjusting the D/G ratio within the above-described range by a preliminary experiment. The degree of oxidation can be adjusted by appropriately selecting a kind of oxidizing agent, an amount thereof, oxidation treatment temperature, oxidation treatment time or the like, and particularly, adjustment of the oxidation treatment temperature is important. When the M2-containing compound (3) (particularly, an iron compound) is used in Step 1, the D/G ratio tends to be lowered.

Step 4 may be performed after the completion of Step 3, specifically after the heat-treated product is cooled to temperature of lower than 100°C, preferably cooled to around room temperature ranging from 10 to 50°C (this embodiment is referred to as the "embodiment 1" hereinafter).

Step 4 may be performed overlapping with Step 3 (this embodiment is referred to as the "embodiment 2" hereinafter). Specifically, it is permitted that in Step 3, with the start or after the start of heat treatment of the solid content residue, oxidation treatment using an oxidizing agent giving an oxygen atom is carried out. In this case, the oxidation treatment of the heat-treated product can mean the oxidation treatment of the solid content residue, to be exact. Herein, however, for the sake of convenience, both the oxidation treatments are regarded as oxidation treatment of the heat-treated product.

In the embodiment 2, water vapor is preferably used as the oxidizing agent.

The embodiment 2, when water vapor is used as the oxidizing agent, can be carried out in such a manner that water vapor is incorporated into an atmosphere gas in Step 3. The amount of water vapor to be incorporated is not particularly limited as long as the oxidation treatment proceeds, but it is preferred that water vapor in an amount of saturated water vapor at 0°C to 50°C is incorporated into an atmosphere gas for introducing in view of easiness of handling.

In the embodiment 2, Step 4 may be continued after the completion of Step 3 (hereinafter, this embodiment is referred to as the "embodiment 3").

In the embodiment 3, the D/G ratio of the composite particles at the time Step 3 is completed is not necessarily required to be in the range of 0.4 to 1.0. In this case, the D/G ratio of composite particles is controlled to be in the range of 0.4 to 1.0 in Step 4 to be performed after Step 3 is completed (hereinafter also referred to as "Step 4a").

The temperature conditions in Step 4a are the same as the temperature conditions in the embodiment 1.

The oxidizing agent used in Step 4a is preferably at least one selected from hydrogen peroxide, perchloric acid and peracetic acid since these are easy to handle.

In the embodiment 3, where Step 4 is performed in two stages as described above, the D/G ratio is easier to control. In this regard, the embodiment 3 is more advantageous than the embodiment 2.

In the embodiment 3, a step of crushing the heat-treated product may be provided between Step 3 and Step 4a.

### [Composite Catalyst]

The oxygen reducing catalyst is a catalyst comprising the composite particles and further comprising particles composed of a noble metal element or its alloy (hereinafter also referred to as "noble metal or the like") supported on the composite particles (hereinafter also referred to as the "noble metal particles") (hereinafter, said catalyst is referred to as the "composite catalyst"). By the oxygen reducing catalyst being said composite catalyst, a low-humidified or non-humidified oxidizing agent gas can be used to operate the fuel cell at high initial voltage.

An example of the noble metal is at least one kind selected from platinum, gold, palladium, iridium, rhodium and ruthenium. Among these, at least one kind selected from platinum, palladium and iridium is preferred, and platinum is more preferred.

Examples of the noble metal alloy include an alloy formed by the noble metals, and an alloy formed by any of the noble metal with at least one kind of metal element selected from iron, nickel, chromium, cobalt, titanium, copper, vanadium and manganese. Among these, an alloy formed by platinum with at least one kind selected from iron, cobalt and nickel is particularly preferred.

The content of the noble metal particles in the composite catalyst is preferably 5 to 50% by mass, more preferably 20 to 40% by mass. When the content of the noble metal particles is in this range, low-humidified or non-humidified oxidizing agent gas can be used to operate a fuel cell at higher initial voltage.

A method for supporting the noble metal or the like is not particularly restricted, as long as the method can support it practically. Preferred is supporting the noble metal or the like by using a precursor of the noble metal or the like.

The precursor of the noble metal or the like herein means a substance that can be the noble metal or the like by predetermined treatment. Specific examples include chloroplatinic acid, iridium chloride and palladium chloride and a mixture thereof.

A method for supporting the precursor of the noble metal or the like onto the composite particles is not particularly restricted. A method utilizing a conventionally known catalyst metal-supporting technique is available. Exemplary methods are:
(1) a method including a step of allowing the composite particles to be dispersed in a solution of the precursor of the noble metal or the like and evaporating the resultant mixture to obtain a solid residue, and a step of then heat-treating the solid residue;
(2) a method including a step of allowing the composite particles to be dispersed in a solution of colloid of the precursor of the noble metal or the like to let the colloid of the precursor of the noble metal or the like be adsorbed onto the composite particles, thereby supporting the noble metal or the like onto the composite particles; and
(3) a method including a step of adjusting a pH of a mixture liquid of a solution containing one or more kinds of the precursor of the noble metal or the like and containing a dispersion of the composite particles, thereby obtaining a metal oxide, hydrous oxide or metal hydroxide and simultaneously letting any of these be adsorbed onto the composite particles, a step of reducing the resultant material, and when necessary, a step of heat-treating the resultant material.

### <Fuel Cell>

The fuel cell used in the present invention comprises a membrane electrode assembly comprising a cathode having a layer including the oxygen reducing catalyst (cathode catalyst layer), an anode and an electrolyte membrane interposed between both the electrodes.

### (Fuel Cell Catalyst Layer)

The anode layer has a catalyst layer (anode catalyst layer). Examples of the anode catalyst layer are a conventionally-known anode catalyst layer (for example, a catalyst layer comprising a platinum-supporting carbon catalyst) and a catalyst layer comprising the above-described oxygen reducing catalyst.

The cathode and anode catalyst layers (fuel cell catalyst layers) each contain an oxygen reducing catalyst and a polymer electrolyte. In order to more reduce electric resistance in the catalyst layers, the catalyst layers may further contain electron conductive particles.

Examples of material of the electron conductive particles include carbon, electrically conductive polymers, electrically conductive ceramics, metals and electrically conductive inorganic oxides such as tungsten oxide or iridium oxide, and these materials may be used alone or in combination thereof. In particular, electron conductive particles composed of carbon have large specific surface area and excellent chemical resistance and inexpensive ones with small diameter are easy to obtain, and therefore the particles composed of carbon alone or a mixture containing carbon and other electron conductive particles is preferred.

Examples of the carbon include carbon black, graphite, activated carbon, carbon nanotubes, carbon nanofibers, carbon nanohorns, fullerene, porous carbon and graphene. If the particle diameter of the electron conductive particles composed of carbon is excessively small, an electron conducting path is hard to form. If the diameter is excessively large, a decrease in gas diffusivity in the catalyst layer or a decrease in catalyst utilization efficiency tends to be caused, and therefore the diameter is preferably in the range of 10 to 1,000 nm, more preferably in the range of 10 to 100 nm.

When the electron conductive particles are composed of carbon, a mass ratio (catalyst: electron conductive particles) of the oxygen reducing catalyst to the electron conductive particles is preferably in the range of 1:1 to 100:1.

The catalyst layer generally contains a polymer electrolyte. The polymer electrolyte is not particularly limited as long as the electrolyte is generally used in the catalyst layer for fuel cells. Specific examples include a perfluorocarbon polymer having sulfonic acid group (e.g., NAFION (registered trademark)), a hydrocarbon-based polymer compound having sulfonic acid group, a polymer compound doped with an inorganic acid such as phosphoric acid, an organic/inorganic hybrid polymer partially substituted with a proton conductive functional group, and a proton conductor composed of a polymer matrix impregnated with a phosphoric acid solution or a sulfuric acid solution. Among these, NAFION is preferred. Examples of a supply source of NAFION upon forming the catalyst layer include a 5% NAFION solution (DE521, manufactured by DuPont).

A method for forming the catalyst layer is not particularly restricted. An exemplary method is applying a suspension prepared by dispersing constitutional materials of the catalyst layer in a solvent onto an electrolyte membrane or a gas diffusion layer described later. Examples of the application methods include dipping, screen printing, roll coating, spraying and bar coating. Also, a suspension prepared by dispersing constituent materials in a solvent may be applied or filtered on a substrate to form a catalyst layer, and the catalyst layer may be transferred to an electrolyte membrane.

### (Electrode)

The electrodes (cathode and anode) each are composed of a catalyst layer and a gas diffusion layer (hereinafter also referred to as "GDL").

The gas diffusion layer is a porous and gas diffusion-facilitating layer. As the gas diffusion layer, any material may be used as long as the material has electron conductivity, high gas diffusibility and high corrosion resistance, but a carbon-based porous material such as carbon paper and carbon cloth, or stainless steel or anticorrosive material-coated aluminum foil for weight reduction is generally used.

### (Membrane Electrode Assembly)

The membrane electrode assembly is formed of the cathode catalyst layer, the anode catalyst layer and a polymer electrolyte membrane arranged between both of the catalyst layers described above. The membrane electrode assembly may have the gas diffusion layer.

As the polymer electrolyte membrane, for example, a polymer electrolyte membrane using a perfluorosulfonic acid-based polymer or a polymer electrolyte membrane using a hydrocarbon-based polymer is generally used. A membrane in which a polymer microporous membrane is impregnated with a liquid electrolyte, a membrane in which a porous body is filled with a polymer electrolyte, or the like may also be used.

The membrane electrode assembly can be obtained by forming the catalyst layer on the electrolyte membrane and/or the gas diffusion layer, and then sandwiching both sides of the electrolyte membrane with the gas diffusion layers, with the cathode catalyst layer and the anode catalyst layer positioned on the inner side, and e.g., hot pressing these.

### <Articles Equipped with Fuel Cell>

The fuel cell may be provided in an article equipped with at least one function selected from the group consisting of power generating function, light-emitting function, heat generating function, sound generating function, movement function, display function and charging function. Specific examples of the articles that can be equipped with the fuel cell include architectural structures such as buildings, houses and tents, lighting equipment such as fluorescent lamps, LEDs, organic ELs, streetlights, interior lightings and traffic lights, machinery, equipment for automobiles including vehicles themselves, home electric appliances, agricultural devices, electronic devices, portable information terminals including mobile phones, cosmetic equipment, portable tools, sanitary materials such as bath articles and toilet articles, furniture, toys, ornaments, notice boards, cooler boxes, outdoor articles such as outdoor power generators, educational materials, artificial flowers, artworks, power sources for cardiac pacemakers, and power sources for heaters and coolers equipped with a Peltier device.

### [Method for Operating Fuel Cell and Power Generation Device]

The method for operating a fuel cell according to the present invention is a method for operating a fuel cell having a membrane electrode assembly comprising a cathode, an anode and an electrolyte membrane interposed between both the electrodes,
wherein the cathode has a layer comprising the oxygen reducing catalyst,
which method comprises supplying the cathode with an oxidizing agent gas which comprises an oxygen gas and which has a relative humidity at a temperature of the membrane electrode assembly of not more than 60%, and supplying the anode with a fuel gas.

According to this operation method, a fuel cell can be operated and power can be generated while a low-humidified oxidizing agent gas is being supplied with no significant voltage decrease as compared with when a high-humidified feed gas is used.

The power generation device (fuel cell system) according to the present invention comprises a fuel cell having a membrane electrode assembly comprising a cathode, an anode and an electrolyte membrane interposed between both the electrodes; a means for supplying the cathode with an oxidizing agent gas which comprises an oxygen gas and which has a relative humidity of not more than 60% at a temperature of the membrane electrode assembly; and a means for supplying the anode with a fuel gas, wherein the cathode has a layer comprising the oxygen reducing catalyst.

The means for supplying the oxidizing agent gas may have a humidifier for humidifying the oxidizing agent gas. The means for supplying the fuel gas may have a humidifier for humidifying the fuel gas. Neither means may have a humidifier.

As the oxidizing agent gas, an oxidizing gas commonly used in polymer electrolyte fuel cells, such as air and oxygen, may be used. As the fuel gas, a fuel gas commonly used in polymer electrolyte fuel cell, such as hydrogen gas, may be used. As the fuel, a liquid fuel such as methanol may be used.

The oxidizing agent gas has a humidity (relative humidity at a temperature of the membrane electrode assembly) which is not more than 60%, or may also be not more than 30% or 0%.

The humidity may be controlled in any method as long as being a method by which water at gas state in a desired amount can be incorporated into the oxidizing agent gas and the fuel gas; for example, when an oxidizing agent gas and a fuel gas each are supplied through a water tank of a humidifier kept at a given temperature, humidity may be controlled by adjusting the temperature of the humidifier.

If the anode having a layer comprising said oxygen reducing catalyst is used, fuel cell operation and power generation are possible with no significant voltage decrease as compared with when a high-humidified gas is used even if a low-humidified fuel gas is fed to the anode. At this time, the fuel gas has a humidity (relative humidity at a temperature of the membrane electrode assembly) which may be not more than 60%, or not more than 45% or 0%.

Using a gas having a humidity of 0% is preferred in terms of requiring no humidifiers for humidifying a feed gas, leading to downsizing the power generation device (fuel cell system).

### Examples

The present invention is described below in more detail by way of Examples.

Various kinds of measurement in Examples and Comparative Examples were performed by methods described below.

### [A. Analytical Method]

### 1. Elemental Analysis

Carbon: About 0.1 g of a sample was weighed and measured using EMIA-110, manufactured by HORIBA, Ltd.

Nitrogen and Oxygen: About 0.1 g of a sample was weighed, sealed into a Ni capsule, and then measured using TC600, manufactured by LECO Corporation.

Transition Metal Element (Titanium or the like): About 0.1 g of a sample was weighed in a platinum dish and was thermally-decomposed with adding an acid thereto. The thermally-decomposed material was adjusted to a fixed volume, and then appropriately diluted and quantitatively determined using ICP-OES (VISTA-PRO, manufactured by Seiko Instruments Inc.) or ICP-MS (HP7500, manufactured by Agilent Technologies, Inc.)

### 2. Powder X-Ray Diffractometry

Measurement of powder X-ray diffraction of a sample was performed using X'Pert MPD, manufactured by PANalytical B.V. Cu-Kα was used as an X-ray light source.

In powder X-ray diffraction of each sample, a signal that was detected with signal (S) to noise (N) ratio (S/N) of 2 or more was counted as one peak. Here, noise (N) was taken as a width of a baseline.

### 3. Raman Spectrometry

Micro-Raman measurement was performed using NRS-5100, manufactured by JASCO Corporation. Before measuring a sample, the apparatus was calibrated using a silicon substrate for reference. A sample was measured in a lattice measuring mode, and measurement on 9 places was taken as one measurement, and the sample was measured 5 times on different positions for each measurement (45 places in total). Spectra obtained in each measurement were averaged, and an average was taken as a final result. The excited wavelength was 532 nm. The exposure time and the number of cumulation were taken as 3 seconds and 5 times, respectively, per one place of laser irradiation point.

The spectra obtained were analyzed using Spectra Manager Version 2, manufactured by JASCO Corporation. Specifically, suitable baseline correction was conducted, and then peak fitting was made on the resulting spectrum in the range of 850 to 2,000 cm⁻¹ using four Lorentz functions having maxima at 1,340 cm⁻¹, 1,365 cm⁻¹, 1,580 cm⁻¹ and 1,610 cm⁻¹. An intensity ratio of a peak at 1,340 cm⁻¹ (D band) to a peak at 1,580 cm⁻¹ (G band) as obtained from the result was calculated as a D/G ratio.

### 4. BET Specific Surface Area Measurement

0.15 g of a sample was collected and subjected to specific surface area measurement using Fully Automatic BET Specific Surface Area Measurement Equipment Macsorb (manufactured by MOUNTECH Co., Ltd.). Pretreatment time and pretreatment temperature were set at 30 minutes and 200°C, respectively.

### 5. Transmission Electron Microscope Observation

Transmission electron microscope (TEM) observation was performed using H9500 (acceleration voltage: 300 kV) manufactured by Hitachi, Ltd. A sample for observation was prepared by ultrasonically dispersing a sample powder into ethanol and then dripping the dispersion on a microgrid for TEM observation. Energy dispersive X-ray fluorescence analysis was also conducted using HD2300 (acceleration voltage: 200 kV), manufactured by Hitachi, Ltd.

### 6. X-ray Absorption Spectroscopy (XAS)

Large-scale radiation facilities generally called "SPring-8" in Harima Science Garden City, Hyogo Prefecture were used for the measurement. The measurement was conducted under conditions described in [0075] of JP-A-2011-240242. Specific conditions are as follows.
(1) Ray Source
   Energy area: 3.8 to 72 keV
   Beam divergence in the horizontal direction: 1.0 mrad
   Photon quantity: to 10^10 photons/s
   Energy resolution: ΔE/E to 10^-4
   Higher harmonic wave elimination rate: to 10^-4
(2) Detection System
   QXAFS method shown in Fig. 8 of JP-A-2011-240242
(3) Information on fitting method of EXAFS
   Name of software: athena, artemis, FEFF
   Cited Designated Reference: "IFEFFIT: interactive EXAFS analysis and FEFF fitting" M. Newville, J. Synchrotron Rad. 8, pp 322-324 (2001).
(4) Information on fitting method of XANES

Absorption-edge energy was subjected to fitting to Victoreen formula (µM = Cλ^3-Dλ^4) for background treatment and to standardization.

### [B. Production of Catalyst and Analysis]

### [Production Example 1]

### Procedure 1-1

To a solution of 15 mL of ethanol and 5 mL of acetic acid, 5 mL of titanium tetraisopropoxide and 5 mL of acetylacetone were added while stirring the resultant mixture at room temperature to prepare a titanium-containing mixture solution. Meanwhile, 3.76 g of glycine and 0.31 g of iron(II) acetate were added to 20 mL of pure water, and the resultant mixture was stirred at room temperature to prepare a glycine-containing mixture solution into which the components were completely dissolved. The titanium-containing mixture solution was slowly added to the glycine-containing mixture solution to give a transparent catalyst precursor solution. By using a rotary evaporator with temperature of a water bath set at about 80°C, a solvent was slowly evaporated while heating and stirring the catalyst precursor solution. A solid residue obtained by completely evaporating the solvent was uniformly and finely ground in a mortar to give a powder (1a).

The powder (1a) was introduced to a tubular furnace and under an atmosphere of a mixed gas of hydrogen gas and nitrogen gas which contained 4% by volume of hydrogen gas and which contained water vapor in a saturated amount at 25°C, the mixed gas being introduced through a bubbler having distilled water kept at 25°C, the temperature inside the furnace was increased at a temperature-increase rate of 20°C/min to 880°C, and heat treatment was conducted at 880°C for 1 hour. The heat-treated powder was left to cool to room temperature and crushed in isopropanol by using a planetary ball mill, followed by filtration and drying, to give a powder (1b).

### Procedure 1-2

1.6 g of the powder (1b) was added to a mixed solution of 800 mL of distilled water and 800 mL of 30% hydrogen peroxide solution, and stirred at 25°C for 2 hours. This was followed by filtration and drying. Thereby, a powder (hereinafter also referred to as the "catalyst (1)") was obtained.

### Procedure 1-3

In 1250 mL of distilled water, 1.00 g of the catalyst (1) and 363 mg of sodium carbonate were introduced, and these were shaken for 30 minutes using an ultrasonic washing machine. The suspension obtained was stirred for 30 minutes in a water bath while keeping a liquid temperature at 80°C. Thereto, 30 mL of distilled water containing 0.660 g of chloroplatinic acid hexahydrate (equivalent to 0.250 g of platinum) was added dropwise over 10 minutes (the liquid temperature was kept at 80°C). Then, the resultant mixture was stirred for 2 hours at a liquid temperature of 80°C. Next, 21.5 mL of 37% formaldehyde aqueous solution was added dropwise to the suspension over 5 minutes. Then, the resultant mixture was stirred for 1 hour at a liquid temperature of 80°C. After completion of the reaction, the suspension was cooled, and black powder was separated by filtration, and dried.

The powder obtained was introduced to a tubular furnace, and under an atmosphere of a mixed gas of hydrogen gas and nitrogen gas which contained 4% by volume of hydrogen gas, was heated to 800°C at a temperature-increase rate of 10°C/min and heated at 800°C for 1 hour, to give a catalyst containing 20% by mass of platinum (hereinafter, also referred to as the "composite catalyst (1)").

### [Production Examples 2 and 3]

The procedure taken in Production Example 1 was repeated except that the amounts of distilled water, the catalyst (1), sodium carbonate, chloroplatinic acid hexahydrate and 37% formaldehyde solution were changed as shown in Table 1, to obtain a composite catalyst (2) or (3) having a different platinum content as shown in Table 1.

In Production Examples 4 to 22, procedures described below and in Table 2 were taken, so that composite catalysts (4) to (22) each having 20% by mass of platinum were obtained.

### [Production Example 4]

### Procedure 4-1. Preparation of Composite Particles

The powder (1a) obtained during the course of Procedure 1-1 of Production Example 1 was prepared again.

The powder (1a) was introduced to a tubular furnace, and under an atmosphere of a mixed gas of hydrogen gas and nitrogen gas which contained 4% by volume of hydrogen gas, the mixed gas being introduced not through a bubbler having distilled water, the temperature inside the furnace was increased at a temperature-increase rate of 10°C/min to 900°C, and heat treatment was conducted at 900°C for 1 hour. The heat-treated powder was left to cool to room temperature, crushed in isopropanol by using a planetary ball mill, filtered and dried, to give a powder (4b).

### Procedure 4-2. Hydrogen Peroxide Treatment

Procedure 1-2 of Production Example 1 was repeated except that the powder (1b) was replaced with 1.6 g of the powder (4b), to obtain a powder (hereinafter also referred to as the "catalyst (4)").

### Procedure 4-3. Procedure of Supporting Platinum

The procedure 1-3 of Production Example 1 was repeated except that the catalyst (1) was replaced with 1.00 g of the catalyst (4), to obtain a composite catalyst (4).

### [Production Example 5]

The procedure 1-1 of Production Example 1 was repeated except that iron(II) acetate was replaced with 0.54 g of ammonium ferrocyanide, to obtain a powder (hereinafter also referred to as the "catalyst (5)").

Further, the procedure 1-3 of Production Example 1 was repeated except that the catalyst (1) was replaced with 1.00 g of the catalyst (5), to obtain a composite catalyst (5).

### [Production Example 6-1]

The procedure 4-1 of Production Example 4 was repeated, and subsequently the procedure 4-2 of Production Example 4 was repeated except that the stirring time was changed from 2 hours to 8 hours, to obtain a powder (hereinafter also referred to as the "catalyst (6-1)"). Further, the procedure 1-3 of Production Example 1 was repeated except that the catalyst (1) was replaced with 1.00 g of the catalyst (6-1), to obtain a composite catalyst (6-1).

### [Production Example 6-2]

The procedure of Production Example 6-1 was repeated except that the stirring time in Production Example 6-1 was changed to 30 minutes, to obtain a composite catalyst (6-2).

### [Production Example 7]

The procedure 4-1 of Production Example 4 was repeated, and subsequently the procedure 4-2 of Production Example 4 was repeated except that the temperature at the time of stirring was changed from 25°C to 0°C, to obtain a powder (hereinafter also referred to as the "catalyst (7)"). Further, the procedure 1-3 of Production Example 1 was repeated except that the catalyst (1) was replaced with 1.00 g of the catalyst (7), to obtain a composite catalyst (7).

### [Production Example 8]

The procedure 1-1 of Production Example 1 was repeated to obtain a powder (hereinafter also referred to as the "catalyst (8)").

Further, the procedure 1-3 of Production Example 1 was repeated except that the catalyst (1) was replaced with 1.00 g of the catalyst (8), to obtain a composite catalyst (8).

### [Composite Catalysts (9) to (11)]

As a composite catalyst (9), a platinum-supporting carbon catalyst (TEC10E50E) manufactured by Tanaka Kikinzoku Kogyo was prepared.

As a composite catalyst (10), a platinum-supporting carbon catalyst (TEC10E50E manufactured by Tanaka Kikinzoku Kogyo, the same as the composite catalyst (9)) was prepared.

As a composite catalyst (11), a platinum-supporting carbon catalyst (TEC10EA50E manufactured by Tanaka Kikinzoku Kogyo) was prepared.

### [Production Example 12]

The procedure 4-1 of Production Example 4 was repeated except that iron(II) acetate was not used, to obtain a powder (hereinafter also referred to as the "catalyst (12)").

Further, the procedure 1-3 of Production Example 1 was repeated except that the catalyst (1) was replaced with 1.00 g of the catalyst (12), to obtain a composite catalyst (12).

### [Production Example 13]

The procedure 4-1 of Production Example 4 was repeated to obtain a powder (hereinafter also referred to as the "catalyst (13)").

Further, the procedure 1-3 of Production Example 1 was repeated except that the catalyst (1) was replaced with 1.00 g of the catalyst (13), to obtain a composite catalyst (13).

### [Production Example 14]

The procedure 4-1 of Production Example 4 was repeated except that the tubular furnace was changed to an infrared gold image furnace manufactured by ULVAC-RIKO, Inc., and the heat treatment temperature was changed from 900°C to 1100°C, to obtain a powder (hereinafter also referred to as the "catalyst (14)").

Further, the procedure 1-3 of Production Example 1 was repeated except that the catalyst (1) was replaced with 1.00 g of the catalyst (14), to obtain a composite catalyst (14).

### [Production Example 15]

Production Example 7 was repeated except that the temperature at the time of stirring in Production Example 7 was changed to 40°C, to obtain a composite catalyst (15).

### [Production Example 16]

Production Example 7 was repeated except that the temperature at the time of stirring in Production Example 7 was changed to 60°C, to obtain a composite catalyst (16).

### [Production Example 17]

Production Example 7 was repeated except that the temperature at the time of stirring in Production Example 7 was changed to 100°C, to obtain a composite catalyst (17).

### [Production Example 18]

5.10 g of titanium carbide (manufactured by Soegawa Rikagaku), 0.80 g of titanium oxide (manufactured by Wako Pure Chemical Industries, Ltd.) and 0.31 g of titanium nitride (manufactured by Soegawa Rikagaku) were sufficiently mixed with one another, and heated at 1800°C for 3 hours under nitrogen gas atmosphere. The resultant sintered material was left to cool to room temperature, and crushed with an automatic mortar, to obtain a powder (18a).

The powder (18a) was introduced to a tubular furnace, and under an atmosphere of a mixed gas consisting of 1% by volume of oxygen gas, 4% by volume of hydrogen gas and the rest being nitrogen gas, the mixed gas being introduced not through a bubbler having distilled water, the temperature was increased and heat treatment was conducted at 1000°C for 10 hours, to obtain a powder (hereinafter also referred to as the "catalyst (18)").

Further, the procedure 1-3 of Production Example 1 was repeated except that the catalyst (1) was replaced with 1.00 g of the catalyst (18), to obtain a composite catalyst (18).

### [Production Example 19]

The procedure 1-3 of Production Example 1 was repeated except that the catalyst (1) was replaced with 1.00 g of a rutile-type titanium oxide (manufactured by Wako Pure Chemical Industries, Ltd.) (hereinafter also referred to as the "catalyst (19)"), to obtain a composite catalyst (19).

### [Production Example 20]

The procedure 1-3 of Production Example 1 was repeated except that the catalyst (1) was replaced with 1.00 g of titanium carbide (manufactured by Soegawa Rikagaku) (hereinafter also referred to as the "catalyst (20)"), to obtain a composite catalyst (20).

### [Production Example 21]

The procedure 1-3 of Production Example 1 was repeated except that the catalyst (1) was replaced with 1.00 g of titanium nitride (manufactured by Soegawa Rikagaku) (hereinafter also referred to as the "catalyst (21)"), to obtain a composite catalyst (21).

### [Production Example 22]

The procedure 1-3 of Production Example 1 was repeated except that the catalyst (1) was replaced with 1.00 g of titanium carbonitride (manufactured by A.L.M.T. Corp.) (hereinafter also referred to as the "catalyst (22)"), to obtain a catalyst containing 20% by mass of platinum (hereinafter also referred to as the "composite catalyst (22)").

### [Production Example 23]

In 200 ml of distilled water, 0.750 g of a rutile-type titanium oxide (manufactured by Wako Pure Chemical Industries, Ltd.) (hereinafter also referred to as the "catalyst (23)") and 57.4 mg of sodium carbonate were put, and these were shaken for 30 minutes using an ultrasonic washing machine. The resultant suspension was stirred for 30 minutes in a water bath while keeping a liquid temperature at 80°C. Thereto, 5.25 mL of distilled water containing 0.105 g chloroplatinic acid hexahydrate (manufactured by Wako Pure Chemical Industries, Ltd.) (equivalent to 39.5 mg of platinum) was added dropwise over 10 minutes (a liquid temperature was kept at 80°C). Then, the resultant mixture was stirred for 2 hours at a liquid temperature of 80°C. Next, 3.39 mL of 37% formaldehyde aqueous solution (manufactured by Wako Pure Chemical Industries, Ltd.) was added dropwise to the suspension over 5 minutes. Then, the resultant mixture was stirred for 1 hour at a liquid temperature of 80°C. After completion of the reaction, the suspension was cooled, and black powder was separated by filtration, and dried. Thereby, a catalyst containing 5% by mass of platinum was obtained (hereinafter also referred to as the "composite catalyst (23)").

Further, the catalyst containing 5% by mass of platinum was mixed with a platinum-supporting carbon catalyst (TEC10E50E) manufactured by Tanaka Kikinzoku Kogyo at a ratio of 6:4, to obtain a catalyst composition containing 21.6% by mass of platinum (hereinafter also referred to as the "mixed catalyst (23)").

### [Production Example 24]

In accordance with Example 1 ([0090] to [0097]) of JP-A-2011-115760, a carbonized material (IK(Co) 1000°CAW) (hereinafter also referred to as the "catalyst (24)") was obtained.

Further, the procedure 1-3 of Production Example 1 was repeated except that the catalyst (1) was replaced with 1.00 g of the catalyst (24), to obtain a catalyst containing 20% by mass of platinum (hereinafter also referred to as the "composite catalyst (24)").

### [Production Example 25]

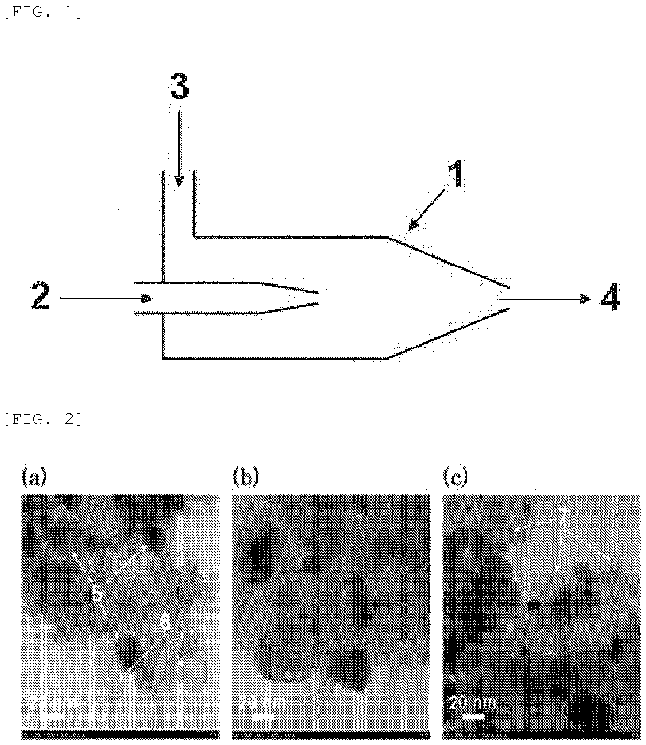

To a heating tube set at 160°C, titanium tetrachloride (manufactured by Junsei Chemical Co., Ltd.) was supplied at 6 g/h, and further nitrogen gas was supplied at 1 L/min, to obtain a mixed gas (a) of titanium tetrachloride gas and nitrogen gas. The mixed gas (a) was supplied to a reaction vessel as shown using a symbol 2 of FIG. 1.

To the heating tube, set at 120°C, water was supplied at 0.1 g/h, and nitrogen gas was further supplied at 100 mL/min to give a mixed gas (b) of water vapor and nitrogen gas.

A mixed gas obtained by diluting, with nitrogen gas at 100 mL/min, ammonia gas at 6 standard cc/min (hereinafter, described as "sccm") and methane gas at 60 sccm, was mixed with the mixed gas (b) to form a mixed gas (c). The mixed gas (c) was supplied to the reaction vessel as shown using a symbol 3 of FIG. 1. The reaction vessel was heated to 1,200°C from outside to perform a reaction among titanium tetrachloride gas, ammonia gas, methane gas and water vapor.

After the reaction, a black-gray product obtained was collected using an extraction thimble, washed with water, and then dried in vacuum to give a powder (hereinafter, also described as the "catalyst (25)").

Further, the procedure 1-3 of Production Example 1 was repeated except that the catalyst (1) was replaced with 1.00 g of the catalyst (25), to obtain a catalyst containing 20% by mass of platinum (hereinafter also referred to as the "composite catalyst (25)").

### [Transmission Electron Microscope Observation]

FIG. 2(a), 2(b) and 2(c) show transmission electron microscope (TEM) observation images of the catalyst (4), the catalyst (5) and the catalyst (13), respectively. In FIG. 2, "5" shows primary particles of a titanium compound, "6" shows graphite-like carbon and "7" shows amorphous-like carbon. According to the TEM observation and energy dispersive X-ray fluorescence analysis, the primary particles of the titanium compound were observed together with a graphite-like or amorphous-like carbon structure in all of the catalysts. Here, no secondary agglomeration of the primary particles of the titanium compound was observed, and the primary particles of the titanium compound were observed to be dispersed in the carbon structure. A noteworthy fact is more decrease of the amorphous-like carbon and clearer observation of the graphite-like carbon in the catalyst (4) and the catalyst (5) in comparison with the catalyst (13).

The same tendency was confirmed also in the catalyst (1) and the catalyst (6-1) to the catalyst (8) (not shown in the drawings).

### [Powder X-ray Diffraction Analysis]

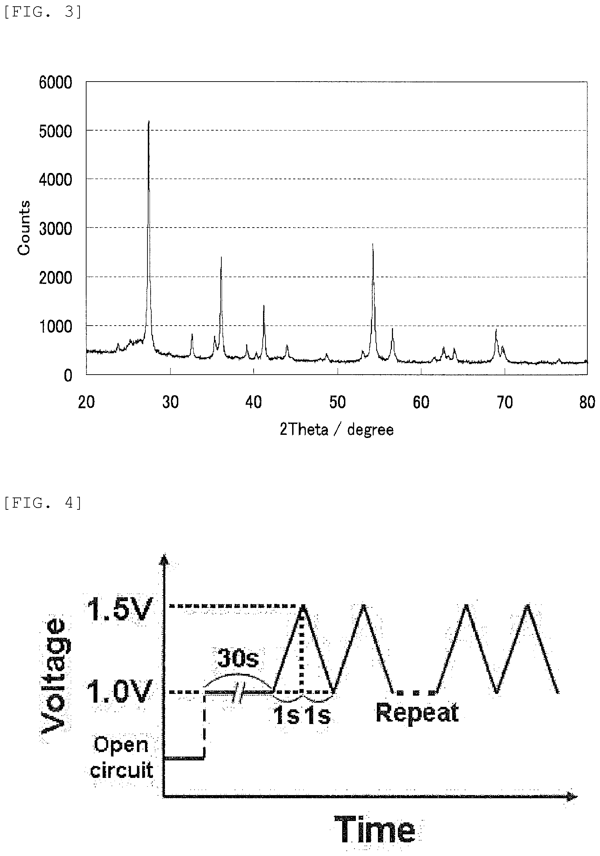

Powder X-ray diffraction (XRD) pattern of the catalyst (4) is shown in FIG. 3.

In XRD pattern of a rutile-type TiO₂ (manufactured by Wako Pure Chemical Industries, Ltd.), a standard sample used for measurement as a reference system, a peak is present in each of the range of 2θ = 26 to 28° (area A), the range of 2θ = 35 to 37° (area B), the range of 2θ = 40 to 42° (area C) and the range of 2θ = 53 to 55° (area D), and a peak with the highest intensity of all the peaks that appear in the XRD pattern (the range of 2θ = 0 to 90°) is present in the area A. These characteristics were observed also in the XRD pattern of the catalyst (4). Accordingly, the main phase of the catalyst (4) was identified to be a rutile-type titanium oxide.

In XRD patterns of the catalyst (1), and the catalysts (5) to (8) (not shown in the drawings), too, the above characteristics of the XRD pattern of a rutile-type TiO₂ were observed. Therefore, the main phase of these catalysts was identified to be a rutile-type titanium oxide.

### [X-Ray Absorption Spectroscopy]

The catalyst (1) and the catalysts (4) to (8) were subjected to X-ray absorption spectroscopy (XAS).

In X-ray absorption near-edge structure (XANES) of titanium, a threshold of X-ray absorption had a value between TiO₂ (titanium valence: 4) and Ti₂O₃ (titanium valence: 3), which were standard samples measured as a reference system. From this, the valence of titanium contained in the catalyst (1) and the catalysts (4) to (8) was estimated to be more than 3 and less than 4.

### [Elementary Analysis and Raman Measurement]

Regarding the individual catalysts, elemental analysis results, D/G ratios as calculated by the above-described method in Raman spectrometry analysis, and specific surface areas as calculated by BET method are shown in Tables 4 and 5.

### [C. Production of Membrane Electrode Assembly for Fuel Cell]

### 1. Preparation of Cathode Ink

To any one of the composite catalysts (1) to (3), (10) and (11) and the mixed catalyst (23) (the amount of any of these is 60.0 mg), 0.12 g of aqueous 5% NAFION solution (an aqueous solution containing 6.0 mg of NAFION (manufactured by Wako Pure Chemical Industries, Ltd.)) as a proton conductive material, 3.36 mL of pure water, and 3.36 mL of isopropanol were added, and these were ultrasonically irradiated in iced water for 30 minutes, to prepare any of cathode inks (1) to (3), (10), (11) and (23). (The number attached to each cathode ink corresponds with the number attached to each composite catalyst used. The same applies hereinafter).

The procedure taken for the preparation of the cathode ink (1) was repeated except that the composite catalyst (1) was replaced with the composite catalyst (9) or (24), the amounts of the catalyst, aqueous 5% NAFION solution, pure water and isopropanol were changed as shown in Table 3, to prepare a cathode ink (9) or (24) having a composite catalyst amount per unit area that is different as shown in Table 3.

Any one of the composite catalysts (4) to (8), (12) to (22) and (25) (the amount of any of these is 33.7 mg) was mixed with 8.43 mg of graphitized carbon black (GrCB-K, manufactured by SHOWA DENKO K.K.) as an electron conductive material. Thereto, aqueous 5% NAFION solution, pure water and isopropanol each in an amount shown in Table 3 were added, and these were ultrasonically irradiated in iced water for 30 minutes, to prepare any of cathode inks (4) to (8), (12) to (22) and (25) having a composite catalyst amount per unit area that is different as shown in Table 3.

### 2. Preparation of Cathode having Fuel Cell Catalyst Layer

A gas diffusion layer (carbon paper (TGP-H-060, manufactured by Toray Industries, Inc.)) was immersed in acetone for 30 seconds and degreased, and then dried, and subsequently immersed in a 10% polytetrafluoroethylene (PTFE) aqueous solution for 30 seconds.

The immersed material was dried at room temperature, and then heated at 350°C for 1 hour to give a cathode GDL having water repellency in which PTFE was dispersed inside the carbon paper. In the preparation of the cathodes (1) to (25), this cathode GDL, with a size of 5 cm × 5 cm, was used.

Next, the cathode ink (1) was applied at 80°C, using an automatic spray coating system (manufactured by SAN-EI TECH Ltd.), onto a surface of the cathode GDL, to prepare a cathode (1) having, on the surface of the cathode GDL, a cathode catalyst layer having 0.500 mg/cm² per unit area of the composite catalyst (1).

The procedure taken for the preparation of the cathode (1) was repeated except that the cathode ink (1) was replaced with any of the cathode inks (2) to (25), to prepare any of cathodes (2) to (25) having a catalyst amount per unit area that is different as shown in Table 3.

The amount of noble metal per unit area in each cathode described above was adjusted to 0.1 mg/cm².

### 3. Preparation of Anode Ink

In 50 mL of pure water, 0.6 g of a platinum-supporting carbon catalyst (TEC10E70TPM, manufactured by Tanaka Kikinzoku Kogyo) and 5 g of a proton conductive material (an aqueous solution containing 0.25 g of NAFION (aqueous 5% NAFION solution manufactured by Wako Pure Chemical Industries, Ltd.) were put, and were mixed for 1 hour using an ultrasonic disperser, to prepare an anode ink (1).

### 4. Preparation of Anode Electrode having Fuel Cell Catalyst Layer

A gas diffusion layer (carbon paper (TGP-H-060, manufactured by Toray Industries, Inc.)) was immersed in acetone for 30 seconds and degreased, and then dried, and subsequently immersed in a 10% polytetrafluoroethylene (PTFE) aqueous solution for 30 seconds.

The immersed material was dried at room temperature, and then heated at 350°C for 1 hour to give an anode GDL having water repellency in which PTFE was dispersed inside the carbon paper.

Next, the anode ink (1) was applied at 80°C, using an automatic spray coating system (manufactured by SAN-EI TECH Ltd.), on a surface of the anode GDL cut into a size of 5 cm × 5 cm, to prepare an electrode (hereinafter, also referred to as the "anode (1)") having, on the surface of the anode GDL, an anode catalyst layer having 1.00 mg/cm² per unit area of the platinum-supporting carbon catalyst.

### 5. Preparation of Membrane Electrode Assembly for Fuel Cell

A membrane electrode assembly for a fuel cell (hereinafter, also referred to as "MEA") prepared by arranging an electrolyte membrane between the cathode and the anode was prepared as described below.

The electrolyte membrane (NAFION membrane (NR-212), manufactured by DuPont) was interposed between the cathode (1) and the anode (1), and these were hot-pressed at a temperature of 140°C and a pressure of 1 MPa over 7 minutes using a hot press machine so that the cathode catalyst layer and the anode catalyst layer adhered onto the electrolyte membrane, to prepare MEA (1).

Further, the cathode (1) was changed to any of the cathodes (2) to (25), and the same procedure as described above was performed, to prepare any of MEA (2) to (25).

### 6. Preparation of Single Cell

MEA (1) prepared in Item 5 described above was interposed between two sealants (gaskets), two separators with gas channels, two current collectors and two rubber heaters, and fixed using a bolt, and these were fastened so as to reach a predetermined contact pressure (0.8Pa), to prepare a single cell (hereinafter, also referred to as the "single cell (1)") (cell area: 5 cm²) of a polymer electrolyte fuel cell.

Further, MEA (1) was changed to any of MEA (2) to (25), and the same procedure as described above was performed, to prepare any of single cells (2) to (25).

### [Evaluation of Hydrophilicity and Hydrophobicity]

When water was dropwise added to the composite catalyst or mixed catalyst and water quickly permeated through the catalyst, the catalyst was regarded as having hydrophilicity. On the other hand, water dropwise added to e.g., graphite carbon powder, turns into water droplet on the surface of the graphite carbon powder surface and does not permeate, and thus graphite carbon powder is regarded as having hydrophobicity.

It was found as a result of the above test that the composite catalysts (1) to (8), (12) to (22) and (25) had hydrophilicity.

### [D. Operation of Fuel Cell]

### [Example 1]

### 1. Operation of Fuel Cell Under Low Humidity

Temperature was adjusted at 80°C for the single cell (1) and 60°C for an anode humidifier. Then, the anode side was supplied as a fuel with a hydrogen gas having a relative humidity (RH) of about 45% through the anode humidifier; and the cathode side was supplied with air (dry air) not through any humidifier. Under the oxygen effective utilization of 40% and the hydrogen gas effective utilization of not less than 10%, the fuel cell (single cell (1)) was operated, and constant-current coulometry measurement at a current density of 0.3 A/cm² was carried out, and a voltage value (V) of 20 hours thereafter was measured. A ratio of the voltage value recorded when dry air was used to a voltage value recorded when air having a relative humidity (RH) of 100% (hereinafter also referred to as the "voltage ratio (low-humidified/high-humidified)") is shown in Table 4 or 5. The voltage value recorded when air having a relative humidity (RH) of 100% was used was a value of "initial voltage" of current-voltage (I-V) characteristics that was measured in start-stop durability test described later.

It is to be noted here that the use of the composite catalysts (1) to (8) and the composite catalysts (12) to (17) resulted in obtaining a higher voltage ratio (low-humidified/high-humidified), unlike when the mixed catalyst (23) was used. The difference in the voltage ratio (low-humidified/high-humidified) is believed to be caused by the reason that while in the mixed catalyst (23), a TiO₂ part serving as a hydrophilic part and a carbon part are not uniformly dispersed in the catalyst layer, the composite catalysts (1) to (8) and the composite catalysts (12) to (17) have a configuration that primary particles of a compound of the metal element M1 are highly dispersed in a structure composed of carbon. It is generally known that uniformly mixing plural kinds of particles differing in nature (for example, inorganic particles having high specific gravity and high hydrophilicity, e.g., titanium oxide, together with carbon particles having low specific gravity and low hydrophilicity), such as the mixed catalyst (23), for film formation is technically difficult. By using the composite catalysts (1) to (8) and the composite catalysts (12) to (17) according to the present invention, it is possible to provide a method for more easily operating a fuel cell with high performance under low humidity.

### 2. Start-Stop Durability Test

Composite catalysts showing power generation performance in the test results of fuel cell operation under low humidity were subjected to start-stop durability test.

Temperature was adjusted at 80°C for the single cell (1), 80°C for an anode humidifier, and 80°C for a cathode humidifier. Then, the anode side was supplied as a fuel with a hydrogen gas having a relative humidity (RH) of 100% through the anode humidifier, and the cathode side was supplied with air having a relative humidity (RH) of 100% through the cathode humidifier. Then, current-voltage (I-V) characteristics of the single cell (1) were evaluated.

Then, under conditions of temperature adjusted at 80°C for the single cell (1), 80°C for the anode humidifier and 80°C for the cathode humidifier, while supplying the anode side with a hydrogen gas having a relative humidity (RH) of 100% through the anode humidifier and supplying the cathode side with a nitrogen having a relative humidity (RH) of 100% through the cathode humidifier, triangular wave potential cycles including 1.0 V to 1.5 V and 1.5 V to 1.0 V as shown in FIG. 4 were applied 20,000 times. Thereafter, current-voltage (I-V) characteristics were evaluated under the conditions mentioned above.

Further, a ratio of a voltage value at 0.3 A/cm² as obtained from the current-voltage (I-V) characteristics given after applying the triangular wave potential cycles 20,000 times as described above, to a voltage value (hereinafter, also described as "initial voltage") at 0.3 A/cm² as obtained from the current-voltage (I-V) characteristics given before applying the triangular wave potential cycle (hereinafter, said ratio is also referred to as the "voltage holding ratio") was determined. The "initial voltage" and "voltage holding ratio" are shown in Tables 4 and 5.

In the current-voltage (I-V) characteristics of the fuel cell (single cell), a voltage value at a certain current density serves as an index of performance of the fuel cell. More specifically, higher initial voltage represents higher initial performance of the fuel cell, meaning higher activity of the oxygen reducing catalyst; and higher voltage holding ratio represents higher start-stop durability of the fuel cell, meaning higher start-stop durability of the oxygen reducing catalyst.

Since the above test evaluates corrosion resistance of the catalyst (carrier supporting a noble metal catalyst) to water, a fuel cell that exhibits high voltage holding ratio when a high-humidified oxidizing agent gas is used can be said to exhibit a high voltage holding ratio also when a low-humidified or non-humidified oxidizing agent gas is used.

### [Examples 2 to 14 and Comparative Examples 1 to 11]

Regarding each of the single cells (2) to (25), a fuel cell (single cell) was operated as in Example 1 and evaluated. Results are shown in Tables 4 and 5. The corresponding relation between the number attached to Examples and Comparative Examples and the number attached to the single cells used are described in Tables 4 and 5. Some fuel cells exhibiting low initial voltage were not operated under low humidity and start durability test thereof was not conducted.

**[Table 1]**

| | Distilled water [ml] | Catalyst (1) [g] | Sodium carbonate [mg] | Solution dropwise added | | | 37% formaldehyde aqueous solution [ml] | Platinum content in catalyst % by mass | |
|---|---|---|---|---|---|---|---|---|---|
| | | | | Chloroplatinic acid hexahydrate [g] | Platinum equivalent amount [g] | Distilled water [ml] | | | |
| Production Example 1 | 1250 | 1.00 | 363 | 0.660 | 0.250 | 30 | 21.5 | 20 | Composite catalyst (1) |
| Production Example 2 | 399.4 | 0.70 | 116 | 0.217 | 0.078 | 10.8 | 6.8 | 10 | Composite catalyst (2) |
| Production Example 3 | 617 | 0.70 | 179.3 | 0.335 | 0.124 | 16.8 | 10.6 | 15 | Composite catalyst (3) |

**[Table 2]**

| | Preparation of composite particles | | | | Hydrogen peroxide treatment | | Procedure of supporting platinum | |
|---|---|---|---|---|---|---|---|---|
| | Glycine-containing mixture solution | | Heating treatment | | Stirring | | Catalyst | |
| | Iron(II) acetate [g] | Ammonium ferrocyanide [g] | Furnace | Temperature [°C] | Time [hour] | Temperature [°C] | | |
| Production Example 4 | 0.31 | 0.00 | Tubular furnace | 900 | 2 | 25 | Catalyst (4) | Composite catalyst (4) |
| Production Example 5 | 0.00 | 0.54 | | | - | | Catalyst (5) | Composite catalyst (5) |
| Production Example 6-1 | 0.31 | 0.00 | | | 8 | 25 | Catalyst (6-1) | Composite catalyst (6-1) |
| Production Example 6-2 | | | | | 0.5 | | Catalyst (6-2) | Composite catalyst (6-2) |
| Production Example 7 | | | | | 2 | 0 | Catalyst (7) | Composite catalyst (7) |
| Production Example 8 | | | | | - | | Catalyst (8) | Composite catalyst (8)*1 |
| Production Example 9 | - | | | | | | | Composite catalyst (9)*2 |
| Production Example 10 | | | | | | | | Composite catalyst (10)*3 |
| Production Example 11 | | | | | | | | Composite catalyst (11)*4 |
| Production Example 12 | 0.00 | 0.00 | Tubular furnace | 900 | - | | Catalyst (12) | Composite catalyst (12) |
| Production Example 13 | 0.31 | | | | | | Catalyst (13) | Composite catalyst (13)*5 |
| Production Example 14 | | | Infrared gold image furnace | 1100 | | | Catalyst (14) | Composite catalyst (14) |
| Production Example 15 | | | Tubular furnace | 900 | 2 | 40 | Catalyst (15) | Composite catalyst (15) |
| Production Example 16 | | | | | | 60 | Catalyst (16) | Composite catalyst (16) |
| Production Example 17 | | | | | | 100 | Catalyst (17) | Composite catalyst (17) |
| Production Example 18 | - | | | | | | Catalyst (18) | Composite catalyst (18) |
| Production Example 19 | | | | | | | Rutile-type titanium oxide | Composite catalyst (19) |
| Production Example 20 | | | | | | | Titanium carbide | Composite catalyst (20) |
| Production Example 21 | | | | | | | Titanium nitride | Composite catalyst (21) |
| Production Example 22 | | | | | | | Titanium nitride | Composite catalyst (22) |

| | | | | | | | | |
|---|---|---|---|---|---|---|---|---|
| *1: composite particles were prepared by "procedure 1-1". *2: TEC10E50E *3: TEC10E50E, the same as composite catalyst (9) *4: TEC10EA50E *5: composite particles were prepared by "procedure 4-1". | | | | | | | | |

**[Table 3]**

| Cathode ink | | | | | | | Cathode | |
|---|---|---|---|---|---|---|---|---|
| | Catalyst [mg] | | Amount of NAFION contained in aqueous 5% NAFION solution [mg] | GrCB-K [mg] | Pure water [ml] | Isopropanol [ml] | Catalyst amount per unit area [mg/cm²] | |
| Cathode ink (1) | Composite catalyst (1) | 60.0 | 6.0 | 0.00 | 3.36 | 3.36 | 0.500 | Cathode (1) |
| Cathode ink (2) | Composite catalyst (2) | | | | | | 1.000 | Cathode (2) |
| Cathode ink (3) | Composite catalyst (3) | | | | | | 0.667 | Cathode (3) |
| Cathode ink (4) | Composite catalyst (4) | 33.7 | 25.3 | 8.43 | 2.3 | 2.3 | 0.625 | Cathode (4) |
| Cathode ink (5) | Composite catalyst (5) | | | | | | | Cathode (5) |
| Cathode ink (6-1) | Composite catalyst (6-1) | | | | | | | Cathode (6-1) |
| Cathode ink (6-2) | Composite catalyst (6-2) | | | | | | | Cathode (6-2) |
| Cathode ink (7) | Composite catalyst (7) | | | | | | | Cathode (7) |
| Cathode ink (8) | Composite catalyst (8) | | | | | | | Cathode (8) |
| Cathode ink (9) | Composite catalyst (9) | 90.0 | 37.5 | 0.00 | 3.75 | 3.75 | 0.200 | Cathode (9) |
| Cathode ink (10) | Composite catalyst (10) | 60.0 | 6.0 | | 3.36 | 3.36 | | Cathode (10) |
| Cathode ink (11) | Composite catalyst (11) | | | | | | | Cathode (11) |
| Cathode ink (12) | Composite catalyst (12) | 33.7 | 25.3 | 8.43 | 2.3 | 2.3 | 0.625 | Cathode (12) |
| Cathode ink (13) | Composite catalyst (13) | | | | | | | Cathode (13) |
| Cathode ink (14) | Composite catalyst (14) | | | | | | | Cathode (14) |
| Cathode ink (15) | Composite catalyst (15) | | | | | | | Cathode (15) |
| Cathode ink (16) | Composite catalyst (16) | | | | | | | Cathode (16) |
| Cathode ink (17) | Composite catalyst (17) | | | | | | | Cathode (17) |
| Cathode ink (18) | Composite catalyst (18) | | | | | | | Cathode (18) |
| Cathode ink (19) | Composite catalyst (19) | | | | | | | Cathode (19) |
| Cathode ink (20) | Composite catalyst (20) | | | | | | | Cathode (20) |
| Cathode ink (21) | Composite catalyst (21) | | | | | | | Cathode (21) |
| Cathode ink (22) | Composite catalyst (22) | | | | | | | Cathode (22) |
| Cathode ink (23) | Composite catalyst (23) | 60.0 | 6.0 | 0.00 | 3.36 | 3.36 | 0.462 | Cathode (23) |
| Cathode ink (24) | Composite catalyst (24) | 90.0 | 37.5 | | 3.75 | 3.75 | 0.500 | Cathode (24) |
| Cathode ink (25) | Composite catalyst (25) | 33.7 | 25.3 | 8.43 | 2.3 | 2.3 | 0.625 | Cathode (25) |

**[Table 4]**

| | Number attached to Composite catalyst, Single cell and the like | Composition of composite catalyst (molar ratio) | | | | | D/G ratio | BET specific surface area (m²/g) | Operation of fuel cell under low humidity | Start durability test | |
|---|---|---|---|---|---|---|---|---|---|---|---|
| | | Ti | Fe | C | N | O | | | Voltage ratio (low-humidified/high-humidified) | Initial voltage E (V) | Voltage holding ratio (%) |
| Example 1 | (1) | 1 | 0.11 | 3.24 | 0.03 | 2.10 | 0.74 | 192 | 0.69 | 0.65 | 84.5 |
| Example 2 | (2) | 1 | 0.11 | 3.24 | 0.03 | 2.10 | 0.74 | 192 | 0.66 | 0.71 | 74.0 |
| Example 3 | (3) | 1 | 0.11 | 3.24 | 0.03 | 2.10 | 0.74 | 192 | 0.73 | 0.66 | 83.3 |
| Comp. Ex. 1 | (9) | - | - | - | - | - | 1.13 | 344 | 0.55 | 0.71 | 54.1 |
| Comp. Ex. 2 | (10) | - | - | - | - | - | 1.13 | 344 | 0.16 | 0.62 | 58.0 |
| Comp. Ex. 3 | (11) | - | - | - | - | - | 0.36 | 94.2 | 0.11 | 0.68 | 89.6 |
| Comp. Ex. 9 | Mixed catalyst (23) | 1 | - | 2.49 | - | 2.00 | 1.13 | - | 0.00 | 0.63 | - |
| Comp. Ex. 10 | (24) | | | | | | 0.63 | 178.4 | 0.48 | 0.63 | 62.7 |

**[Table 5]**

| | Number attached to Composite catalyst, Single cell and the like | Composition of composite catalyst (molar ratio) | | | | | D/G ratio | BET specific surface area (m²/g) | Operation of fuel cell under low humidity | Start durability test | |
|---|---|---|---|---|---|---|---|---|---|---|---|
| | | Ti | Fe | C | N | O | | | Voltage ratio (low-humidified/high-humidified) | Initial voltage E (V) | Voltage holding ratio (%) |
| Example 4 | (4) | 1 | 0.09 | 2.58 | 0.16 | 1.43 | 0.88 | 237.3 | 0.70 | 0.501 | 65.3 |
| Example 5 | (5) | 1 | 0.11 | 3.30 | 0.02 | 1.92 | 0.82 | 175.8 | 0.71 | 0.58 | 68.4 |
| Example 6 | (6-1) | 1 | 0.09 | 2.57 | 0.16 | 1.56 | 0.81 | 186.2 | 0.68 | 0.527 | 71.6 |
| - | (6-2) | 1 | 0.09 | 2.69 | 0.18 | 1.37 | 0.83 | 225.0 | 0.69 | 0.536 | 73.7 |
| Example 7 | (7) | 1 | 0.09 | 2.73 | 0.17 | 1.34 | 0.99 | 227.5 | 0.66 | 0.502 | 61.7 |
| Example 8 | (8) | 1 | 0.11 | 4.00 | 0.04 | 2.09 | 0.83 | 192.0 | 0.73 | 0.600 | 70.7 |
| Example 9 | (12) | 1 | - | 2.35 | 0.05 | 1.40 | 1.18 | 273.0 | 0.69 | 0.549 | 56.9 |
| Example 10 | (13) | 1 | 0.10 | 2.83 | 0.18 | 1.39 | 1.09 | 220.6 | 0.72 | 0.445 | 51.3 |
| Example 11 | (14) | 1 | 0.10 | 1.62 | 0.23 | 1.16 | 1.39 | 257.2 | 0.66 | 0.518 | 21.2 |
| Example 12 | (15) | 1 | 0.10 | 2.77 | 0.16 | 1.85 | 1.07 | 230.8 | 0.70 | 0.484 | 53.2 |
| Example 13 | (16) | 1 | 0.11 | 3.00 | 0.14 | 2.69 | 1.32 | 86.0 | 0.74 | 0.418 | 30.4 |
| Example 14 | (17) | 1 | 0.11 | 2.79 | 0.15 | 2.77 | 2.17 | 82.6 | 0.71 | 0.422 | 38.0 |
| Comp. Ex. 4 | (18) | 1 | - | 0.10 | 0.01 | 1.84 | 1.10 | 4.2 | 0.61 | 0.263 | 0.0 |
| Comp. Ex. 5 | (19) | 1 | - | - | 0.001 | 1.95 | - | 7.1 | 0.00 | 0.087 | 0.0 |
| Comp. Ex. 6 | (20) | 1 | - | 1.05 | - | 0.00 | 0.89 | 4.8 | - | 0.000 | - |
| Comp. Ex. 7 | (21) | 1 | - | 0.02 | 1.10 | 0.03 | - | 2.1 | - | 0.000 | - |
| Comp. Ex. 8 | (22) | 1 | - | 0.52 | 0.54 | 0.04 | - | 1.4 | - | 0.000 | - |
| Comp. Ex. 11 | (25) | 1 | - | 0.12 | 0.15 | 1.25 | 0.89 | 21.9 | 0.63 | 0.318 | 0.0 |

### Reference Signs List

1: Reaction vessel
2: Mixed gas (a) of titanium tetrachloride gas and nitrogen gas
3: Mixed gas (C) of methane, ammonia, water and nitrogen
4: Reaction product (to be collected)
5: Primary particles of titanium compound
6: Graphite-like carbon
7: Amorphous-like carbon

## Claims

1. A method for operating a fuel cell comprising a membrane electrode assembly including a cathode, an anode and an electrolyte membrane interposed between both the electrodes,
wherein the cathode has a layer comprising an oxygen reducing catalyst comprising
(i) composite particles, the composite particles being particles in which primary particles of a compound of a metal element M1 are dispersed in a structure composed of carbon, the composite particles comprising an atom of at least one metal element M1 selected from the group consisting of titanium, niobium, zirconium, tantalum and tin, and atoms of carbon, nitrogen and oxygen, wherein carbon is contained at not less than 0.5 mol and not more than 7 mol, nitrogen is contained at more than 0 mol and not more than 1 mol, and oxygen is contained at not less than 1 mol and not more than 3 mol based on 1 mol of the whole of the metal element M1, and comprising
(ii) particles composed of a noble metal element or its alloy,
which method comprises supplying the cathode with an oxidizing agent gas which comprises an oxygen gas and which has a relative humidity at a temperature of the membrane electrode assembly of not more than 60%, and supplying the anode with a fuel gas.

2. The method for operating a fuel cell according to claim 1, wherein the metal element M1 is titanium.

3. The method for operating a fuel cell according to claim 1 or 2, wherein the composite particles have a spectrum obtained from Raman spectrometry in which an intensity ratio (D/G ratio) of a peak intensity of D band to a peak intensity of G band is 0.4 to 1.0.

4. The method for operating a fuel cell according to any one of claims 1 to 3, wherein the composite particles comprise at least one metal element M2 selected from the group consisting of iron, nickel, chromium, cobalt and manganese at not more than 0.3 mol based on 1 mol of the metal element M1.

5. The method for operating a fuel cell according to any one of claims 1 to 4, wherein the metal element M1 is titanium and the composite particles have a diffraction pattern obtained from X-ray diffractometry using Cu-Kα ray in which a peak is present in each of an area A of 2θ = 26 to 28°, an area B of 2θ = 35 to 37°, an area C of 2θ = 40 to 42° and an area D of 2θ = 53 to 55° and a peak with the highest intensity of all the peaks that appear in the diffraction pattern is present in the area A.

6. The method for operating a fuel cell according to any one of claims 1 to 5, wherein the metal element M1 is titanium, and a valence of titanium in the composite particles as determined by X-ray absorption near-edge structure (XANES) analysis is more than 3 and less than 4.

7. The method for operating a fuel cell according to any one of claims 1 to 6, wherein the noble metal element is at least one noble metal selected from platinum, palladium, iridium, rhodium and ruthenium.

8. The method for operating a fuel cell according to any one of claims 1 to 7, wherein the alloy of the noble metal element is an alloy composed of the noble metal element and at least one metal element selected from the group consisting of iron, nickel, chromium, cobalt, titanium, copper, vanadium and manganese.

9. The method for operating a fuel cell according to any one of claims 1 to 8, wherein the anode has a layer comprising an oxygen reducing catalyst, and the oxygen reducing catalyst comprises particles comprising the composite catalyst and a noble metal element or an alloy of the noble metal element.

10. The method for operating a fuel cell according to any one of claims 1 to 9, wherein the anode is supplied with the fuel gas which is a gas having a relative humidity of not more than 60% at a temperature of the membrane electrode assembly.

11. A power generation device comprising:
a fuel cell that comprises a membrane electrode assembly comprising a cathode, an anode and an electrolyte membrane interposed between both the electrodes;
a means for supplying the cathode with an oxidizing agent gas which contains an oxygen gas and which has a relative humidity of not more than 60% at a temperature of the membrane electrode assembly; and
a means for supplying the anode with a fuel gas,
wherein the cathode has a layer comprising an oxygen reducing catalyst including
(i) composite particles in which primary particles of a compound of a metal element M1 are dispersed in a structure composed of carbon, the composite particles comprising an atom of at least one metal element M1 selected from the group consisting of titanium, niobium, zirconium, tantalum and tin, and atoms of carbon, nitrogen and oxygen, wherein carbon is contained at not less than 0.5 mol and not more than 7 mol, nitrogen is contained at more than 0 mol and not more than 1 mol, and oxygen is contained at not less than 1 mol and not more than 3 mol based on 1 mol of the whole of the metal element M1, and including
(ii) particles composed of a noble metal element or its alloy.

## Patentansprüche

1. Verfahren zum Betreiben einer Brennstoffzelle, umfassend eine Membran-Elektrodenanordnung mit einer Kathode, einer Anode und einer zwischen beiden Elektroden angeordneten Elektrolytmembran,
wobei die Kathode eine einen sauerstoffreduzierenden Katalysator enthaltende Schicht aufweist, umfassend
(i) Verbundteilchen, wobei die Verbundteilchen Teilchen sind, in denen Primärteilchen einer Verbindung eines Metallelements M1 in einer aus Kohlenstoff bestehenden Struktur dispergiert sind, wobei die Verbundteilchen ein Atom mindestens eines Metallelements M1, ausgewählt aus der aus Titan, Niob, Zirkonium, Tantal und Zinn bestehenden Gruppe, und Atome von Kohlenstoff, Stickstoff und Sauerstoff umfassen, worin nicht weniger als 0,5 mol und nicht mehr als 7 mol Kohlenstoff, mehr als 0 mol und nicht mehr als 1 mol Stickstoff und nicht weniger als 1 mol und nicht mehr als 3 mol Sauerstoff in Bezug auf 1 mol des gesamten Metallelements M1 enthalten sind, und umfassend
ii) Partikel, die aus einem Edelmetallelement oder einer Legierung davon bestehen,
wobei das Verfahren das Zuführen der Kathode zu einem Oxidationsmittelgas, das ein Sauerstoffgas umfasst und eine relative Luftfeuchtigkeit bei einer Temperatur der Membran-elektrodenanordnung von nicht mehr als 60% aufweist, und das Zuführen der Anode zu einem Brenngas umfasst.

2. Verfahren zum Betreiben einer Brennstoffzelle nach Anspruch 1, wobei das Metallelement M1 Titan ist.

3. Verfahren zum Betreiben einer Brennstoffzelle nach Anspruch 1 oder 2, worin die Verbundpartikel ein durch Ramanspektrometrie erhaltenes Spektrum aufweisen, bei dem ein Intensitätsverhältnis (D/G-Verhältnis) einer Spitzenintensität von D-Band zu einer Spitzenintensität von G-Band 0,4 bis 1,0 beträgt.

4. Verfahren zum Betreiben einer Brennstoffzelle nach einem der Ansprüche 1 bis 3, worin die Verbundteilchen nicht mehr als 0,3 Mol, bezogen auf 1 Mol des Metallelements M1, mindestens eines Metallelements M2, ausgewählt aus der aus Eisen, Nickel, Chrom, Kobalt und Mangan bestehenden Gruppe, enthalten.

5. Verfahren zum Betreiben einer Brennstoffzelle nach einem der Ansprüche 1 bis 4, worin das Metallelement M1 Titan ist und die Verbundpartikel ein Beugungsmuster aufweisen, das aus der Röntgendiffraktometrie unter Verwendung von Cu-Kα-Strahl erhalten wurde, worin jeweils ein Peak in einem Bereich A von 2θ = 26 bis 28°, einem Bereich B von 2θ = 35 bis 37°, einem Bereich C von 2θ = 40 bis 42° und einem Bereich D von 2θ = 53 bis 55° vorhanden ist und ein Peak mit der höchsten Intensität aller Peaks, die im Beugungsmuster auftreten, in dem Bereich A vorhanden ist.

6. Verfahren zum Betreiben einer Brennstoffzelle nach einem der Ansprüche 1 bis 5, wobei das Metallelement M1 Titan ist und eine durch die Röntgenabsorptionsnahkantenstrukturanalyse (XANES) bestimmte Valenz von Titan in den Verbundteilchen mehr als 3 und weniger als 4 beträgt.

7. Verfahren zum Betreiben einer Brennstoffzelle nach einem der Ansprüche 1 bis 6, wobei das Edelmetallelement mindestens ein unter Platin, Palladium, Iridium, Rhodium und Ruthenium ausgewählt Edelmetall ist.

8. Verfahren zum Betreiben einer Brennstoffzelle nach einem der Ansprüche 1 bis 7, wobei die Legierung des Edelmetallelements eine Legierung ist, die aus dem Edelmetallelement und mindestens einem Metallelement besteht, das aus der aus Eisen, Nickel, Chrom, Kobalt, Titan, Kupfer, Vanadium und Mangan bestehenden Gruppe ausgewählt.

9. Verfahren zum Betreiben einer Brennstoffzelle nach einem der Ansprüche 1 bis 8, wobei die Anode eine Schicht aufweist, die einen sauerstoffreduzierenden Katalysator umfasst, und der sauerstoffreduzierende Katalysator Partikel umfasst, die den Verbundkatalysator und ein Edelmetallelement oder eine Legierung des Edelmetallelements umfassen.

10. Verfahren zum Betreiben einer Brennstoffzelle nach einem der Ansprüche 1 bis 9, wobei die Anode mit dem Brenngas versorgt wird, das ein Gas mit einer relativen Luftfeuchtigkeit von nicht mehr als 60% bei einer Temperatur der Membranelektrodenanordnung ist.

11. Energieerzeugungsvorrichtung, umfassend:
eine Brennstoffzelle, die eine Membran-Elektrodenanordnung umfasst, die eine Kathode, eine Anode und eine Elektrolytmembran umfasst, die zwischen beiden Elektroden angeordnet sind;
ein Mittel zur Versorgung der Kathode mit einem Oxidationsmittelgas, das ein Sauerstoffgas enthält und das bei einer Temperatur der Membranelektrodenanordnung eine relative Luftfeuchtigkeit von nicht mehr als 60% aufweist; und
ein Mittel zum Versorgen der Anode mit einem Brenngas,
wobei die Kathode eine einen sauerstoffreduzierenden Katalysator enthaltende Schicht aufweist, umfassend
(i) Verbundteilchen, in denen Primärteilchen einer Verbindung eines Metallelements M1 in einer aus Kohlenstoff bestehenden Struktur dispergiert sind, wobei die Verbundteilchen ein Atom von mindestens einem Metallelement M1, ausgewählt aus der Gruppe bestehend aus Titan, Niob, Zirkonium, Tantal und Zinn, und Atome von Kohlenstoff, Stickstoff und Sauerstoff umfassen, wobei bezogen auf 1 mol des gesamten Metallelements M1 nicht weniger als 0,5 mol und nicht mehr als 7 mol Kohlenstoff, mehr als 0 mol und nicht mehr als 1 mol Stickstoff und nicht weniger als 1 mol und nicht mehr als 3 mol Sauerstoff enthalten sind, und umfassend
ii) Partikel, die aus einem Edelmetallelement oder einer Legierung davon bestehen.

## Revendications

1. Procédé de fonctionnement d'une pile à combustible comprenant un ensemble d'électrode à membrane comprenant une cathode, une anode et une membrane électrolytique intercalée entre les deux électrodes,
dans lequel la cathode présente une couche comprenant un catalyseur de réduction d'oxygène, comprenant:
(i) des particules composites, les particules composites étant des particules dans lesquelles des particules primaires d'un composé d'un élément métallique M1 sont dispersées dans une structure composée de carbone, les particules composites comprenant un atome d'au moins un élément métallique M1 sélectionné dans le groupe comprenant le titane, le niobium, le zirconium, le tantale et l'étain, et des atomes de carbone, d'azote et d'oxygène, dans lequel le carbone est contenu à pas moins de 0,5 mole et pas plus de 7 moles, l'azote est contenu à plus de 0 mole et pas plus de 1 mole, et l'oxygène est contenu à pas moins de 1 mole et pas plus de 3 moles sur la base de 1 mole de la totalité de l'élément métallique M1, et comprenant:
(ii) des particules composées d'un élément de métal noble ou de son alliage,
ledit procédé comprenant la fourniture à la cathode d'un agent gazeux oxydant contenant un gaz d'oxygène et présentant une humidité relative à une température de l'ensemble d'électrode à membrane non supérieure à 60 %, et la fourniture d'un gaz combustible à l'anode.

2. Procédé de fonctionnement d'une pile à combustible selon la revendication 1, dans lequel l'élément métallique M1 est le titane.

3. Procédé de fonctionnement d'une pile à combustible selon la revendication 1 ou 2, dans lequel les particules composites présentent un spectre obtenu par spectrométrie Raman dans laquelle un rapport d'intensité (rapport D/G) entre un pic d'intensité de bande D et un pic d'intensité de bande G vaut de 0,4 à 1,0.

4. Procédé de fonctionnement d'une pile à combustible selon l'une quelconque des revendications 1 à 3, dans lequel les particules composites comprennent au moins un élément métallique M2 sélectionné dans le groupe comprenant le fer, le nickel, le chrome, le cobalt et le manganèse à pas plus de 0,3 mole sur la base de 1 mole de l'élément métallique M1.

5. Procédé de fonctionnement d'une pile à combustible selon l'une quelconque des revendications 1 à 4, dans lequel l'élément métallique M1 est le titane et les particules composites présentent un motif de diffraction obtenu par diffractométrie de rayons X en utilisant un rayon de Cu-Kα dans lequel un pic est présent dans chaque région parmi une région A de 2θ = 26° à 28°, une région B de 2θ = 35° à 37°, une région C de 2θ = 40° à 42° et une région D de 2θ = 53° à 55°, et un pic présentant la plus haute intensité de tous les pics qui apparaissent dans le motif de diffraction est présent dans la région A.

6. Procédé de fonctionnement d'une pile à combustible selon l'une quelconque des revendications 1 à 5, dans lequel l'élément métallique M1 est le titane, et une valence du titane dans les particules composites déterminée par une analyse de structure près du front d'absorption de rayons X (XANES) est supérieure à 3 et inférieure à 4.

7. Procédé de fonctionnement d'une pile à combustible selon l'une quelconque des revendications 1 à 6, dans lequel l'élément de métal noble est au moins un métal noble sélectionné parmi le platine, le palladium, l'iridium, le rhodium et le ruthénium.

8. Procédé de fonctionnement d'une pile à combustible selon l'une quelconque des revendications 1 à 7, dans lequel l'alliage de l'élément de métal noble est un alliage composé de l'élément de métal noble et d'au moins un élément métallique sélectionné dans le groupe comprenant le fer, le nickel, le chrome, le cobalt, le titane, le cuivre, le vanadium et le manganèse.

9. Procédé de fonctionnement d'une pile à combustible selon l'une quelconque des revendications 1 à 8, dans lequel l'anode présente une couche comprenant un catalyseur de réduction d'oxygène, et le catalyseur de réduction d'oxygène comprend des particules comprenant le catalyseur composite et un élément de métal noble ou un alliage de l'élément de métal noble.

10. Procédé de fonctionnement d'une pile à combustible selon l'une quelconque des revendications 1 à 9, dans lequel l'anode est alimentée avec le gaz combustible qui est un gaz présentant une humidité relative non supérieure à 60 % à une température de l'ensemble d'électrode à membrane.

11. Dispositif de production d'énergie électrique, comprenant:
une pile à combustible comprenant un ensemble d'électrode à membrane comprenant une cathode, une anode et une membrane électrolytique intercalée entre les deux électrodes;
des moyens pour alimenter la cathode avec un agent gazeux oxydant contenant un gaz d'oxygène et présentant une humidité relative non supérieure à 60 % à une température de l'ensemble d'électrode à membrane; et
des moyens pour alimenter l'anode avec un gaz combustible,
dans lequel la cathode présente une couche comprenant un catalyseur de réduction d'oxygène, comprenant:
(i) des particules composites dans lesquelles des particules primaires d'un composé d'un élément métallique M1 sont dispersées dans une structure composée de carbone, les particules composites comprenant un atome d'au moins un élément métallique M1 sélectionné dans le groupe comprenant le titane, le niobium, le zirconium, le tantale et l'étain, et des atomes de carbone, d'azote et d'oxygène, dans lequel le carbone est contenu à pas moins de 0,5 mole et pas plus de 7 moles, l'azote est contenu à plus de 0 mole et pas plus de 1 mole, et l'oxygène est contenu à pas moins de 1 mole et pas plus de 3 moles sur la base de 1 mole de la totalité de l'élément métallique M1, et comprenant:
(ii) des particules composées d'un élément de métal noble ou de son alliage.
